# EUROPEAN PATENT APPLICATION

(11) **EP 4 485 997 A1**
(43) Date of publication of application: **01.01.2025**
(21) Application number: 23211539.4
(22) Date of filing: 22.11.2023
(51) Int. Cl.: H04W 28/08, H04W 24/02, H04W 84/00

(54) **METHODS AND APPARATUS FOR AUTONOMOUS MOBILE ROBOTS**

(30) Priority: 28.06.2023 US 202318343607
(71) Applicant: Intel Corporation, Santa Clara, CA 95054 (US)
(72) Inventor: THYAGATURU, Akhilesh S., Tempe, AZ, 85281 (US); GARG, Mohit Kumar, 125005 Hisar (IN); GUIM BERNAT, Francesc, 08036 Barcelona (ES); MOUSTAFA, Hassnaa, San Jose, CA, 95123 (US)
(74) Representative: Maiwald GmbH

(57) **Abstract**

Systems, apparatus, articles of manufacture, and methods are disclosed. A first example apparatus disclosed herein is an autonomous mobile radio access network (RAN) node that includes communication circuitry, instructions, and programmable circuitry to cause the communication circuitry to transmit a workload to a server via a network, initiate local processing of the workload after a loss of connectivity with the server, and move the autonomous mobile RAN node from a first location to a second location. A second example apparatus disclosed herein is an autonomous mobile RAN node that includes communication circuitry, instructions, and programmable circuitry to cause communication of a workload from a client device to a server to process the workload, identify a second location relative to a first location of the compute device based on network performance, and cause the autonomous mobile RAN node to move from the first location to the second location.

## Description

### FIELD OF THE DISCLOSURE

This disclosure relates generally to edge computing and, more particularly, to methods and apparatus for autonomous mobile robots.

### BACKGROUND

Edge computing refers to a computing architecture in which compute and memory resources are situated at base stations or other locations between endpoint devices and traditional mobile network access points in order to meet low latency requirements. For example, an endpoint device in an edge environment may offload workloads to one or more compute and memory resources. The one or more compute and memory resources may be located in close proximity to the endpoint device. The one or more compute and memory resources may additionally or alternatively be configured to execute the specific type of workload provided by the client device. As a result, a client device may obtain results with less latency than a traditional network, where workloads are offloaded to a server.

### BRIEF DESCRIPTION OF THE DRAWINGS

FIG. 1 illustrates an overview of an example edge cloud configuration for edge computing in which the teachings of this disclosure can be implemented.
FIG. 2 illustrates example operational layers among endpoints, an edge cloud, and cloud computing environments.
FIG. 3 illustrates an example approach for networking and services in an edge computing system.
FIG. 4 is a block diagram of an example implementation of a Radio Area Network (RAN).
FIG. 5 is a block diagram of an example implementation of a RAN Intelligence Controller (RIC) node included in the RAN of FIG. 4.
FIG. 6 is a block diagram of an example implementation of an Autonomous Mobile Robot (AMR) node included in the RAN of FIG. 4.
FIG. 7 is an example block diagram of a learning agent included in the examples of FIGS. 5 and 6.
FIG. 8 is a flowchart representative of example machine readable instructions and/or example operations that may be executed, instantiated, and/or performed by example programmable circuitry to maintain a quality of service (QoS) agreement.
FIG. 9 is a flowchart representative of example machine readable instructions and/or example operations that may be executed, instantiated, and/or performed by example programmable circuitry to cause an AMR node to move as described in connection with FIG. 8.
FIG. 10 is an illustrative example of communications between a user device, RAN node, RIC, and edge application of FIG. 4 to initialize online communications and to transition to offline communications.
FIG. 11 is an illustrative example of communications between a user device, RAN node, RIC, and edge application of FIG. 4 to re-position an AMR node 406A.
FIG. 12 is an illustrative example of message holdover between the client devices and RAN of FIG. 4.
FIG. 13 is an example of intermittent wireless-backhaul connectivity loss within an AMR node of FIG. 4.
FIG. 14 is a block diagram of an example processing platform including programmable circuitry structured to execute, instantiate, and/or perform the example machine readable instructions and/or perform the example operations of FIGS. 8-11 to implement the AMR nodes 406 or RIC node 408 of FIGS. 5 and 6.
FIG. 15 is a block diagram of an example implementation of the programmable circuitry of FIG. 14.
FIG. 16 is a block diagram of another example implementation of the programmable circuitry of FIG. 14.

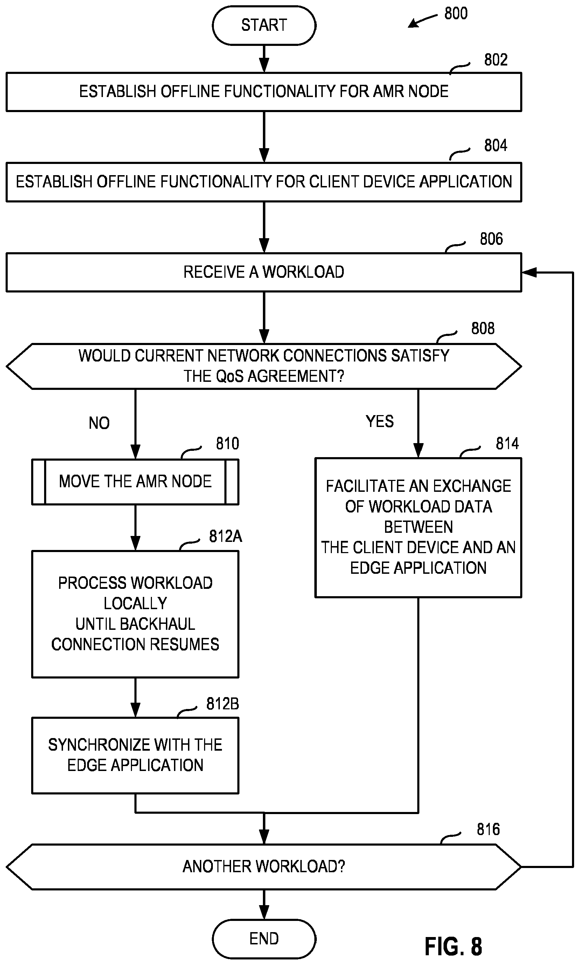

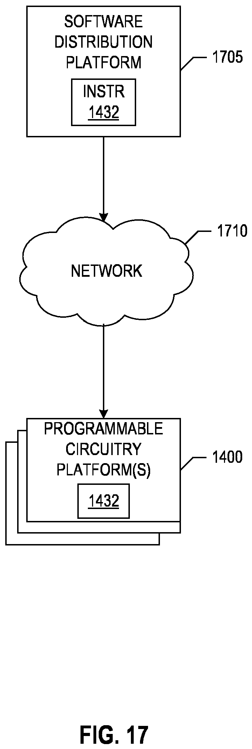

FIG. 17 is a block diagram of an example software/firmware/instructions distribution platform (e.g., one or more servers) to distribute software, instructions, and/or firmware (e.g., corresponding to the example machine readable instructions of FIGS. 8-11) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified in the below description.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

### DETAILED DESCRIPTION

Edge networks use a wide variety of devices in a wide range of locations, configurations, capabilities, etc., to enable a client device to offload a workload to a server. In some use cases the client device that generates the workload does not communicate directly with the server(s) ultimately responsible for executing the workload. The lack of a direct connection could be for any reason, including but not limited to the client device having limited resources, the client device not knowing which server(s) will be responsible for executing the workload, etc.

In some such use cases, the client device communicates directly with an access point device instead of the server(s). After receiving the workload from the client device, the access point device may forward the workload directly to the server(s). In some examples, the access point device is unable to connect directly to the server(s) and instead forwards the workload to another intermediate node within the edge network. The workload may transition between any number of intermediate nodes before arriving at the server(s) responsible for execution.

Intermediate nodes expand the reach of the edge network in that they enable server(s) to execute workloads from a client device without requiring a direct connection to the client device. However, intermediate nodes can also decrease the reliability of an edge network. For example, an intermediate node increases the total number of stable device connections that are each required to move a workload from a client device to a server. Suppose a client device is connected to a first intermediate node, which is connected to second intermediate node, which is connected to a server. If the second intermediate node exhibits a failure and loses connection to the server, the client device may be unable to offload the workload to the server even though the stable connection to the first intermediate node is still intact.

Some edge networks attempt to improve reliability by implementing either an "always online" architecture or an "always offline" architecture. As used herein, "always online" refers to a workload management architecture that does not use the concept of a secondary device to perform operations in the event a primary device exhibits a failover. Rather, "always online" architectures use a central entity to distribute the workload execution over as many qualifying nodes as possible. If one of the qualifying nodes experiences a failure or a fault, the corresponding portion of the workload is distributed across the remaining nodes still in operation. However, networks that rely on all qualifying nodes to execute workloads may risk degradations in performance if the node is a mobile device that moves to an area having lower signal strength (e.g., basements, rural areas, etc.)

In contrast, an "always offline" architecture refers to a design strategy in which software applications create workloads under the presumption there is no network connection (e.g., the application believes it is always offline). In an "always offline" architecture, sources external to the application (such as but not limited to operating systems and intermediate devices) trigger synchronization with an edge network rather than the application itself triggering synchronization. Accordingly, synchronization occurs with the edge network during periods with higher signal strength and execution of the workload occurs locally during periods of lower signal strength. However, "always offline" architectures require local devices with large resource availability to execute the workload whenever network connection weakens. Furthermore, "always offline" architectures require applications to be developed with a set of restrictions that some developers may find cumbersome or impracticable. As a result, the "always offline" architectures scale poorly into larger workload and larger network use cases.

In some examples, a client device agrees to offload work based on a quality of service (QoS) agreement. As used herein, a QoS agreement refers to an expectation that a network will perform operations at a quality characterized by one or more parameters, measurements, etc. For example, a QoS agreement may specify that a workload travelling from a client device to server(s) should exhibit packet loss under a threshold value, bit rate above a threshold value, transmission delay under a threshold value, jitter under a threshold value, throughput over a threshold value, etc. In some examples, a QoS agreement may be referred to as a Service Level Agreement (SLA), a Service Level Objective (SLO), etc.

Client devices implemented as mobile devices (e.g., smart phones, tablets, laptops, etc.) provide a challenge to edge networks because the client device could connect to an intermediate node, begin offloading a workload, and then move out of range from an intermediate node. In such a situation, a signal path that was previously capable of satisfying the QoS agreement may be degraded due to the movement of the mobile device.

Some edge networks attempt to improve reliability by implementing one or more intermediate nodes of the network within a movable device. However, such networks may utilize a central entity that is responsible for determining the position of any movable nodes based on the needs of the entire network. Furthermore, because accumulating position data from multiple client devices may include the transmission of a large amount of data over many devices, some central entities may devalue client device location or may not consider device location at all when determining positions of intermediate nodes.

Example methods, apparatus, and systems described herein describe implementing autonomous mobile robots (AMRs) that function as intermediate devices by receiving a workload from a client device and forwarding the workload for execution at a server. As used herein, an AMR node may additionally or alternatively refer to an autonomous mobile radio access network (RAN) node. An example AMR node includes both client interface circuitry to communicate with client devices and cloud interface circuitry to implement a backhaul connection. As used herein, a backhaul connection refers to the intermediate connections between a given device and a destination device. In some examples, the AMR node implements a gNodeB base station to forward workload nodes when connected to the network. In some examples, the AMR node also includes virtual machines and containers to execute the workload locally if the backhaul connection fails. Accordingly, such an AMR node can enter areas of low signal strength and synchronize upon reconnection in a scalable, efficient manner that does not negatively impact the performance of the entire node. In some examples, the AMR node is also implemented with a learning agent that implements a neural network to continuously identify new locations for connection with a particular client device. Such an AMR node can move to the new location having increased network connectivity without the guidance of a central entity, thereby maintaining a specific QoS agreement for the particular client device.

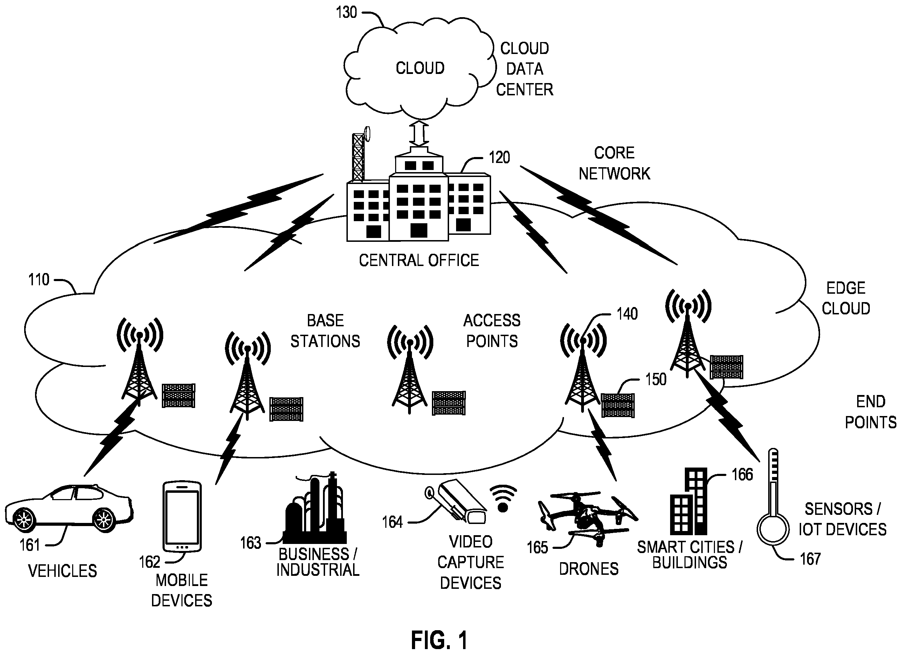

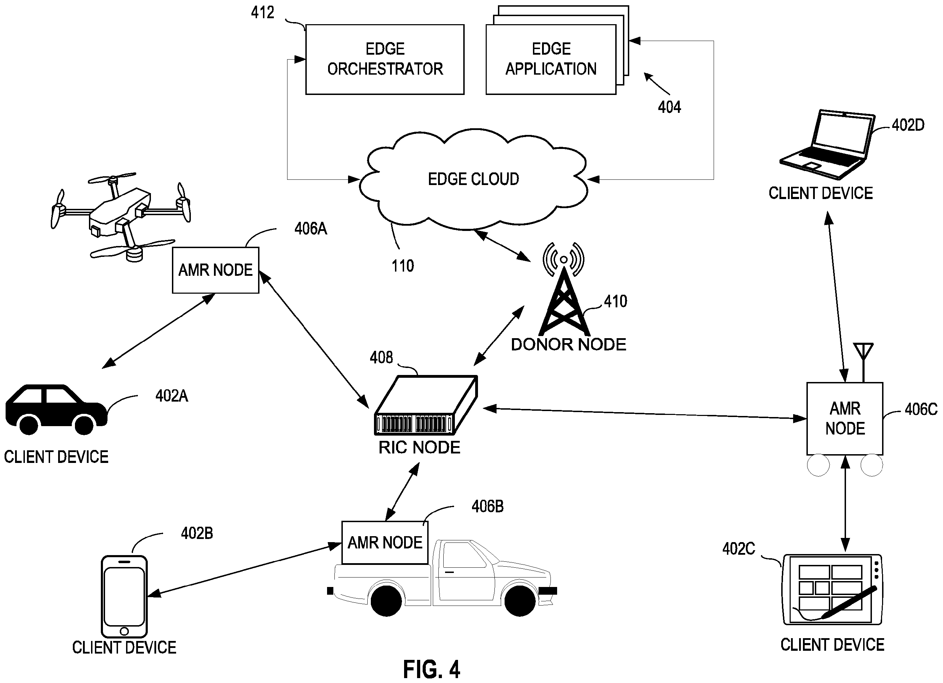

FIG. 1 is a block diagram 100 showing an overview of a configuration for edge computing, which includes a layer of processing referred to in at least some of the following examples as an "edge cloud." As shown, the edge cloud 110 is co-located at an edge location, such as an access point or base station 140, a local processing hub 150, or a central office 120, and thus may include multiple entities, devices, and equipment instances. The edge cloud 110 is located much closer to the endpoint (consumer and producer) data sources 160 (e.g., autonomous vehicles 161, user equipment 162, business and industrial equipment 163, video capture devices 164, drones 165, smart cities and building devices 166, sensors and IoT devices 167, etc.) than the cloud data center 130. Compute, memory, and storage resources which are offered at the edges in the edge cloud 110 are critical to providing ultra-low latency response times for services and functions used by the endpoint data sources 160 as well as reduce network backhaul traffic from the edge cloud 110 toward cloud data center 130 thus improving energy consumption and overall network usages among other benefits. In some examples, devices within the edge cloud 110 implement AMR nodes as described in connection with FIGS. 4-13.

Compute, memory, and storage are scarce resources, and generally decrease depending on the edge location (e.g., fewer processing resources being available at consumer endpoint devices, than at a base station, than at a central office). However, the closer that the edge location is to the endpoint (e.g., user equipment (UE)), the more that space and power is often constrained. Thus, edge computing attempts to reduce the amount of resources needed for network services, through the distribution of more resources which are located closer both geographically and in network access time. In this manner, edge computing attempts to bring the compute resources to the workload data where appropriate, or bring the workload data to the compute resources.

The following describes aspects of an edge cloud architecture that covers multiple potential deployments and addresses restrictions that some network operators or service providers may have in their own infrastructures. These include, variation of configurations based on the edge location (because edges at a base station level, for instance, may have more constrained performance and capabilities in a multi-tenant scenario); configurations based on the type of compute, memory, storage, fabric, acceleration, or like resources available to edge locations, tiers of locations, or groups of locations; the service, security, and management and orchestration capabilities; and related objectives to achieve usability and performance of end services. These deployments may accomplish processing in network layers that may be considered as "near edge", "close edge", "local edge", "middle edge", or "far edge" layers, depending on latency, distance, and timing characteristics.

Edge computing is a developing paradigm where computing is performed at or closer to the "edge" of a network, typically through the use of a compute platform (e.g., x86 or AMR compute hardware architecture) implemented at base stations, gateways, network routers, or other devices which are much closer to endpoint devices producing and consuming the data. For example, edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with standardized compute hardware that performs virtualized network functions and offers compute resources for the execution of services and consumer functions for connected devices. Within edge computing networks, there may be service scenarios in which the compute resource will be "moved" to the data, as well as scenarios in which the data will be "moved" to the compute resource. Or as an example, base station compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

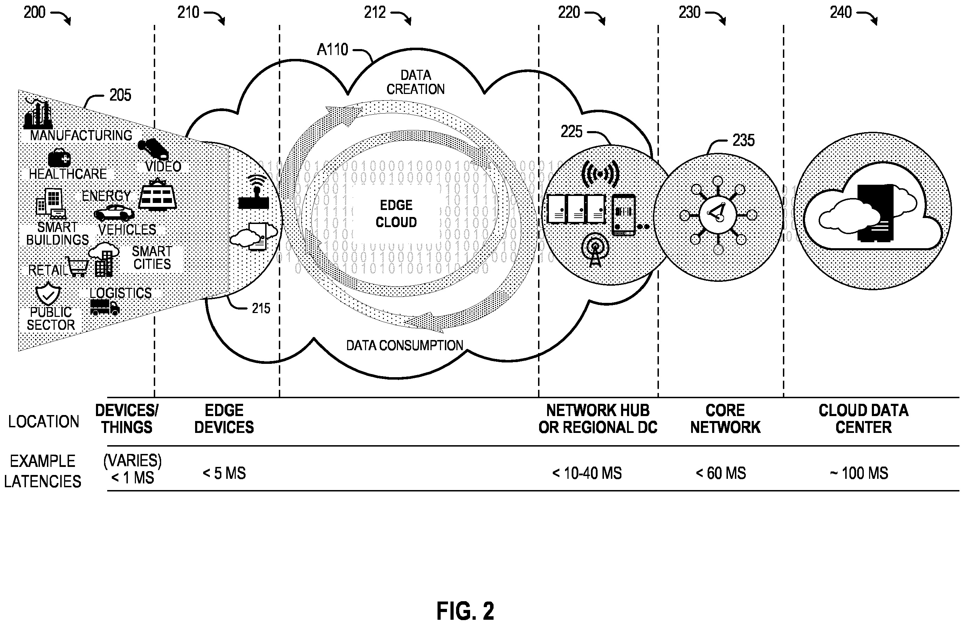

FIG. 2 illustrates operational layers among endpoints, an edge cloud, and cloud computing environments. Specifically, FIG. 2 depicts examples of computational use cases 205, utilizing the edge cloud 110 among multiple illustrative layers of network computing. The layers begin at an endpoint (devices and things) layer 200, which accesses the edge cloud 110 to conduct data creation, analysis, and data consumption activities. The edge cloud 110 may span multiple network layers, such as an edge devices layer 210 having gateways, on-premises servers, or network equipment (nodes 215) located in physically proximate edge systems; a network access layer 220, encompassing base stations, radio processing units, network hubs, regional data centers (DC), or local network equipment (equipment 225); and any equipment, devices, or nodes located therebetween (in layer 212, not illustrated in detail). The network communications within the edge cloud 110 and among the various layers may occur via any number of wired or wireless mediums, including via connectivity architectures and technologies not depicted. In some examples, devices within the edge cloud 110. In some examples, devices within the edge cloud 110 implement AMR nodes as described in connection with FIGS. 4-13.

Examples of latency, resulting from network communication distance and processing time constraints, may range from less than a millisecond (ms) when among the endpoint layer 200, under 5 ms at the edge devices layer 210, to even between 10 to 40 ms when communicating with nodes at the network access layer 220. Beyond the edge cloud 110 are core network 230 and cloud data center 240 layers, each with increasing latency (e.g., between 50-60 ms at the core network layer 230, to 100 or more ms at the cloud data center layer). As a result, operations at a core network data center 235 or a cloud data center 245, with latencies of at least 50 to 100 ms or more, will not be able to accomplish many time-critical functions of the use cases 205. Each of these latency values are provided for purposes of illustration and contrast; it will be understood that the use of other access network mediums and technologies may further reduce the latencies. In some examples, respective portions of the network may be categorized as "close edge", "local edge", "near edge", "middle edge", or "far edge" layers, relative to a network source and destination. For instance, from the perspective of the core network data center 235 or a cloud data center 245, a central office or content data network may be considered as being located within a "near edge" layer ("near" to the cloud, having high latency values when communicating with the devices and endpoints of the use cases 205), whereas an access point, base station, on-premise server, or network gateway may be considered as located within a "far edge" layer ("far" from the cloud, having low latency values when communicating with the devices and endpoints of the use cases 205). It will be understood that other categorizations of a particular network layer as constituting a "close", "local", "near", "middle", or "far" edge may be based on latency, distance, number of network hops, or other measurable characteristics, as measured from a source in any of the network layers 200-240.

The various use cases 205 may access resources under usage pressure from incoming streams, due to multiple services utilizing the edge cloud. To achieve results with low latency, the services executed within the edge cloud 110 balance varying requirements in terms of: (a) Priority (throughput or latency) and Quality of Service (QoS) (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor, etc.).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at each layer in a way to assure real time, and runtime contractual compliance for the transaction during the lifecycle of the service. When a component in the transaction is missing its agreed to Service Level Agreement (SLA), the system as a whole (components in the transaction) may provide the ability to (1) understand the impact of the SLA violation, and (2) augment other components in the system to resume overall transaction SLA, and (3) implement operations to remediate.

Thus, with these variations and service features in mind, edge computing within the edge cloud 110 may provide the ability to serve and respond to multiple applications of the use cases 205 (e.g., object tracking, video surveillance, connected cars, etc.) in real-time or near real-time, and satisfy ultra-low latency requirements for these multiple applications. These variations and service features enable a whole new class of applications (e.g., Virtual Network Functions (VNFs), Function as a Service (FaaS), edge as a Service (EaaS), standard processes, etc.), which cannot leverage conventional cloud computing due to latency or other limitations.

However, edge computing introduces the following caveats. The devices located at the edge are often resource constrained and therefore there is pressure on usage of edge resources. Typically, this is addressed through the pooling of memory and storage resources for use by multiple users (tenants) and devices. The edge may be power and cooling constrained and therefore the power usage needs to be accounted for by the applications that are consuming the most power. There may be inherent power-performance tradeoffs in these pooled memory resources, as many of them are likely to use emerging memory technologies, where more power requires greater memory bandwidth. Likewise, improved security of hardware and root of trust trusted functions are also required, because edge locations may be unmanned and may even need permissioned access (e.g., when housed in a third-party location). Such issues are magnified in the edge cloud 110 in a multi-tenant, multi-owner, or multi-access setting, where services and applications are requested by many users, especially as network usage dynamically fluctuates and the composition of the multiple stakeholders, use cases, and services changes.

At a more generic level, an edge computing system may be described to encompass any number of deployments at the previously discussed layers operating in the edge cloud 110 (network layers 200-240), which provide coordination from client and distributed computing devices. One or more edge gateway nodes, one or more edge aggregation nodes, and one or more core data centers may be distributed across layers of the network to provide an implementation of the edge computing system by or on behalf of a telecommunication service provider ("telco", or "TSP"), Internet-of Things service provider, cloud service provider (CSP), enterprise entity, or any other number of entities. Various implementations and configurations of the edge computing system may be provided dynamically, such as when orchestrated to meet service objectives.

Consistent with the examples provided herein, a client compute node may be embodied as any type of endpoint component, device, appliance, or other thing capable of communicating as a producer or consumer of data. Further, the label "node" or "device" as used in the edge computing system does not necessarily mean that such node or device operates in a client or agent/minion/follower role; rather, any of the nodes or devices in the edge computing system refer to individual entities, nodes, or subsystems which include discrete or connected hardware or software configurations to facilitate or use the edge cloud 110.

As such, the edge cloud 110 is formed from network components and functional features operated by and within edge gateway nodes, edge aggregation nodes, or other edge compute nodes among network layers 210-230. The edge cloud 110 thus may be embodied as any type of network that provides edge computing and/or storage resources which are proximately located to radio access network (RAN) capable endpoint devices (e.g., mobile computing devices, IoT devices, smart devices, etc.), which are discussed herein. In other words, the edge cloud 110 may be envisioned as an "edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks, etc.) may also be utilized in place of or in combination with such 3rd Generation Partnership Project (3GPP) carrier networks.

The network components of the edge cloud 110 may be servers, multi-tenant servers, appliance computing devices, and/or any other type of computing devices. For example, the edge cloud 110 may include an appliance computing device that is a self-contained electronic device including a housing, a chassis, a case, or a shell. In some circumstances, the housing may be dimensioned for portability such that it can be carried by a human and/or shipped. Example housings may include materials that form one or more exterior surfaces that partially or fully protect contents of the appliance, in which protection may include weather protection, hazardous environment protection (e.g., electromagnetic interference (EMI), vibration, extreme temperatures, etc.), and/or enable submergibility. Example housings may include power circuitry to provide power for stationary and/or portable implementations, such as alternating current (AC) power inputs, direct current (DC) power inputs, AC/DC converter(s), DC/AC converter(s), DC/DC converter(s), power regulators, transformers, charging circuitry, batteries, wired inputs, and/or wireless power inputs. Example housings and/or surfaces thereof may include or connect to mounting hardware to enable attachment to structures such as buildings, telecommunication structures (e.g., poles, antenna structures, etc.), and/or racks (e.g., server racks, blade mounts, etc.). Example housings and/or surfaces thereof may support one or more sensors (e.g., temperature sensors, vibration sensors, light sensors, acoustic sensors, capacitive sensors, proximity sensors, infrared or other visual thermal sensors, etc.). One or more such sensors may be contained in, carried by, or otherwise embedded in the surface and/or mounted to the surface of the appliance. Example housings and/or surfaces thereof may support mechanical connectivity, such as propulsion hardware (e.g., wheels, rotors such as propellers, etc.) and/or articulating hardware (e.g., robot AMRs, pivotable appendages, etc.). In some circumstances, the sensors may include any type of input device such as user interface hardware (e.g., buttons, switches, dials, sliders, microphones, etc.). In some circumstances, example housings include output devices contained in, carried by, embedded therein and/or attached thereto. Output devices may include displays, touchscreens, lights, light-emitting diodes (LEDs), speakers, input/output (I/O) ports (e.g., universal serial bus (USB)), etc. In some circumstances, edge devices are devices presented in the network for a specific purpose (e.g., a traffic light), but may have processing and/or other capacities that may be utilized for other purposes. Such edge devices may be independent from other networked devices and may be provided with a housing having a form factor suitable for its primary purpose; yet be available for other compute tasks that do not interfere with its primary task. edge devices include Internet of Things devices. The appliance computing device may include hardware and software components to manage local issues such as device temperature, vibration, resource utilization, updates, power issues, physical and network security, etc. The edge cloud 110 may also include one or more servers and/or one or more multi-tenant servers. Such a server may include an operating system and implement a virtual computing environment. A virtual computing environment may include a hypervisor managing (e.g., spawning, deploying, commissioning, destroying, decommissioning, etc.) one or more virtual machines, one or more containers, etc. Such virtual computing environments provide an execution environment in which one or more applications and/or other software, code, or scripts may execute while being isolated from one or more other applications, software, code, or scripts.

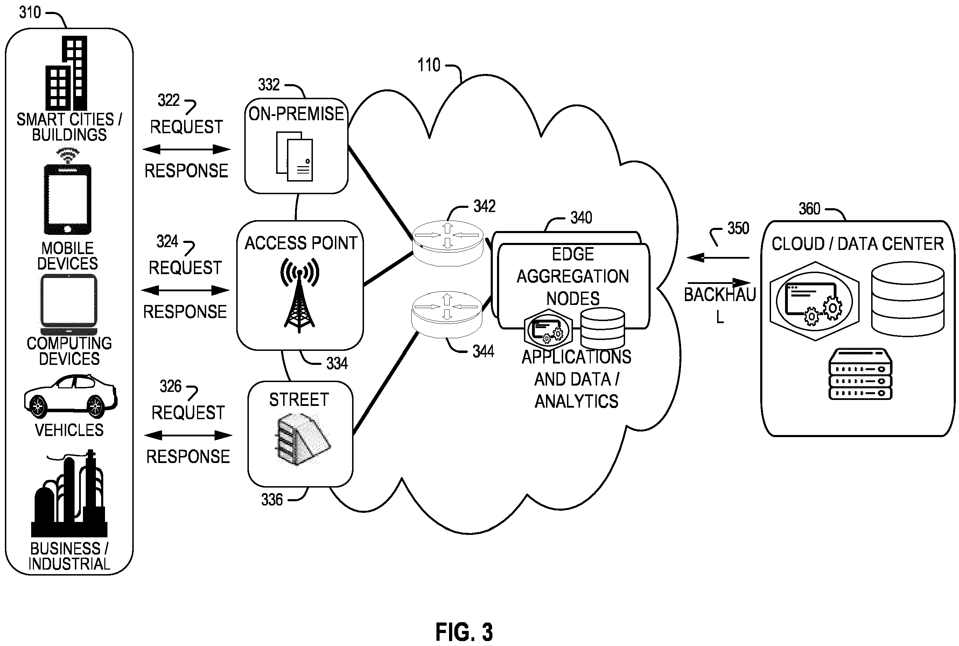

In FIG. 3, various client endpoints 310 (in the form of mobile devices, computers, autonomous vehicles, business computing equipment, industrial processing equipment) exchange requests and responses that are specific to the type of endpoint network aggregation. For instance, client endpoints 310 may obtain network access via a wired broadband network, by exchanging requests and responses 322 through an on-premises network system 332. Some client endpoints 310, such as mobile computing devices, may obtain network access via a wireless broadband network, by exchanging requests and responses 324 through an access point (e.g., a cellular network tower) 334. Some client endpoints 310, such as autonomous vehicles may obtain network access for requests and responses 326 via a wireless vehicular network through a street-located network system 336. However, regardless of the type of network access, the TSP may deploy aggregation points 342, 344 within the edge cloud 110 to aggregate traffic and requests. Thus, within the edge cloud 110, the TSP may deploy various compute and storage resources, such as at edge aggregation nodes 340, to provide requested content. The edge aggregation nodes 340 and other systems of the edge cloud 110 are connected to a cloud or data center 360, which uses a backhaul network 350 to fulfill higher-latency requests from a cloud/data center for websites, applications, database servers, etc. Additional or consolidated instances of the edge aggregation nodes 340 and the aggregation points 342, 344, including those deployed on a single server framework, may also be present within the edge cloud 110 or other areas of the TSP infrastructure.

FIG. 4 is a block diagram of an example implementation of a Radio Area Network (RAN). The example of FIG. 4 includes the example edge cloud 110, example client devices 402A, 402B, 402C, 402D (collectively referred to as client devices 402), example edge applications 404, example AMR nodes 406A, 406B, 406C (collectively referred to as example AMR nodes 406), an example Radio area network Intelligent Controller (RIC) node 408, an example donor node 410, an example edge cloud 110, and an example edge orchestrator 412.

In the example of FIG. 4, the edge cloud 110 connects the edge applications 404, the edge orchestrator 412, and the donor node 410 to one another to enable communication as described above in connection with FIGS. 1 - 3. In some examples, the edge cloud 110 additionally or alternatively connects to one or more of the client devices 402, one or more of the AMR nodes 406, and/or the RIC node 408.

The client devices 402 refer to any devices that can produce and offload workloads. In the example of FIG. 4, each of the client devices 402 are mobile devices (e.g., a laptop, a smart phone, a tablet, a smart car). In some examples, one or more of the client devices 402 are stationary devices. The workloads may describe any type of task and may change based on the type of client device generating the workload. For example, the client device 402A implemented as a smart car may generate a workload to determine a driving route to a destination, while the client device 402B implemented as a smart phone may generate a workload to stream a video. While FIG. 4 shows four client devices 402 for simplicity, in practice, any number of client devices 402 may exist on a given network.

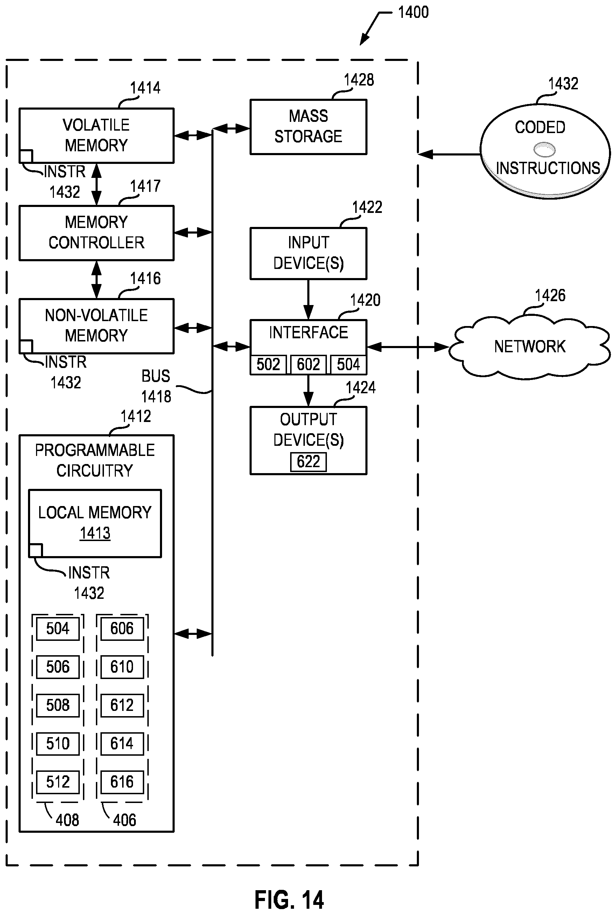

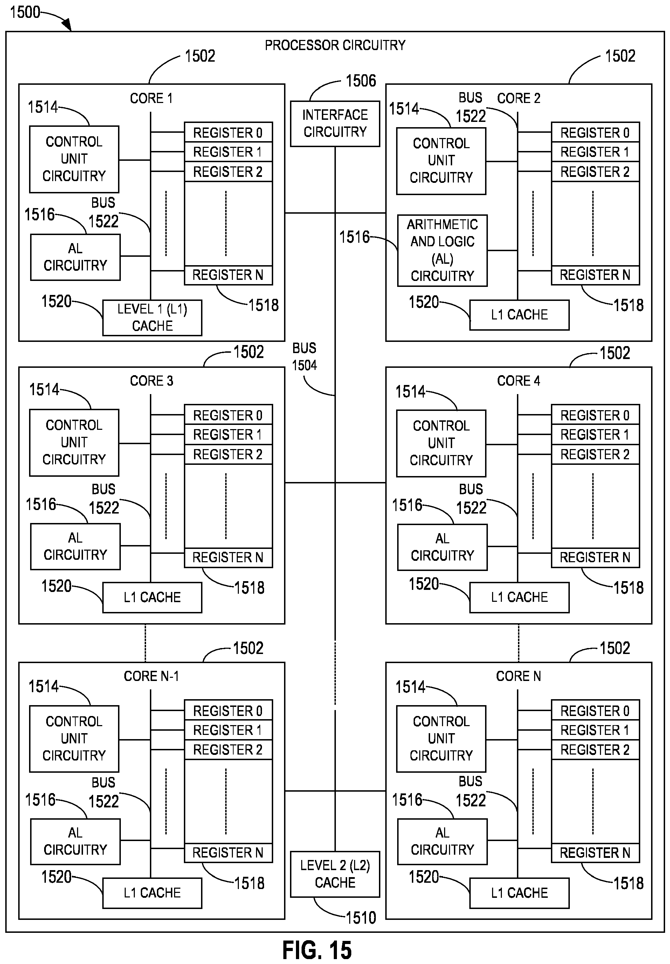

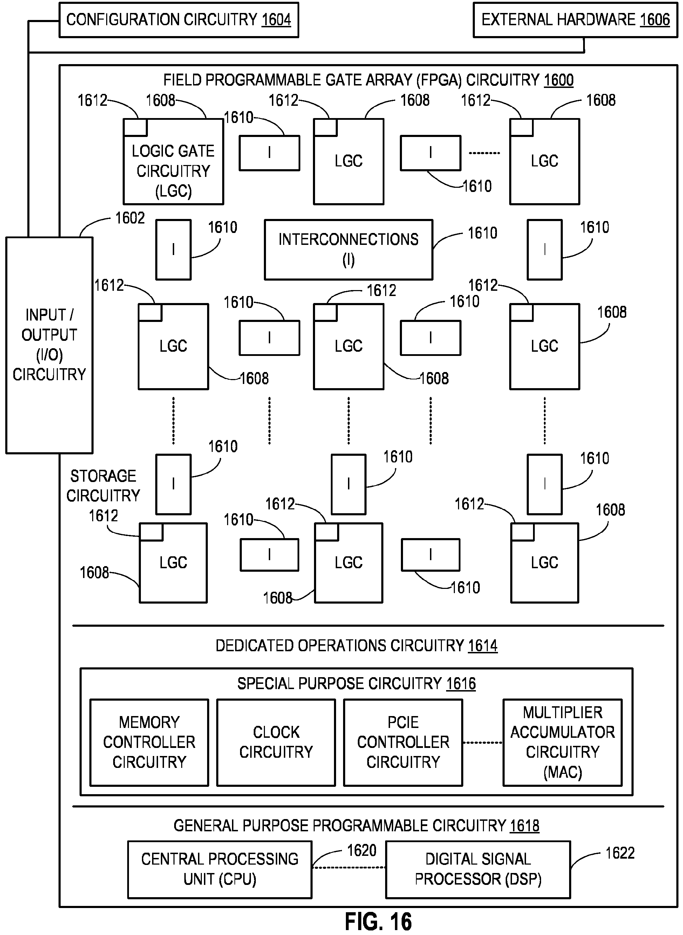

In some examples, the RAN and edge cloud of FIG. 4 includes means for providing a workload. For example, the means for providing a workload may be implemented by the client devices 402. In some examples, the client devices 402 may be instantiated by programmable circuitry such as the example programmable circuitry 1412 of FIG. 14. For instance, the client devices 402 may be instantiated by the example microprocessor 1500 of FIG. 15 executing machine executable instructions such as those implemented by at least blocks 806 of FIG. 8. In some examples, the client devices 402 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the client devices 402 may be instantiated by any other combination of hardware, software, and/or firmware. For example, the client devices 402 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The edge applications 404 refer to software applications that process the workloads defined by the client devices 402. The edge applications 404 may be implemented on any number and any type of devices, including but not limited to desktops, servers, high performance computers, etc. The edge applications 404 connect to the client devices 402 via the edge cloud 110, the donor node 410, and the AMR node 406. Accordingly, the edge applications 404 may be executed at a remote location(s) from the perspective of the client devices 402. may be implemented on any type of programmable circuitry.

In some examples, the RAN and edge cloud of FIG. 4 includes means for processing workloads remotely. For example, the means for processing workloads remotely may be implemented by the edge applications 404. In some examples, the edge applications 404 may be instantiated by programmable circuitry such as the example programmable circuitry 1412 of FIG. 14. For instance, the edge applications 404 may be instantiated by the example microprocessor 1500 of FIG. 15 executing machine executable instructions such as those implemented by at least blocks 814 of FIG. 8. In some examples, the edge applications 404 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the edge applications 404 may be instantiated by any other combination of hardware, software, and/or firmware. For example, the edge applications 404 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The AMR nodes 406 receive workloads from client devices 402, forward workloads to other devices when a backhaul connection is established, and process workloads locally when a backhaul connection is or becomes unavailable (e.g., fails). In the illustrated example, the AMR nodes 406 are implemented by any type of device capable of moving without a human operator. In some examples, one or more of the AMR nodes 406 can be controlled by a human operator (e.g., overridden). For example, AMR node 406A is a drone, AMR node 406B is a smart car, and AMR node 406C refers to any kind of mobile robot. In some examples, one of more of the AMR nodes 406 are implemented by a different kind of movable device. In the example of FIG. 4, each of the AMR nodes 406 connect to the edge cloud 110 and communicate with one another via the RIC node 408. In some examples, one or more of the AMR nodes 406 connect to the edge cloud 110 and/or communicate with other AMR nodes 406 without involving RIC node 408 and/or the donor node 410.

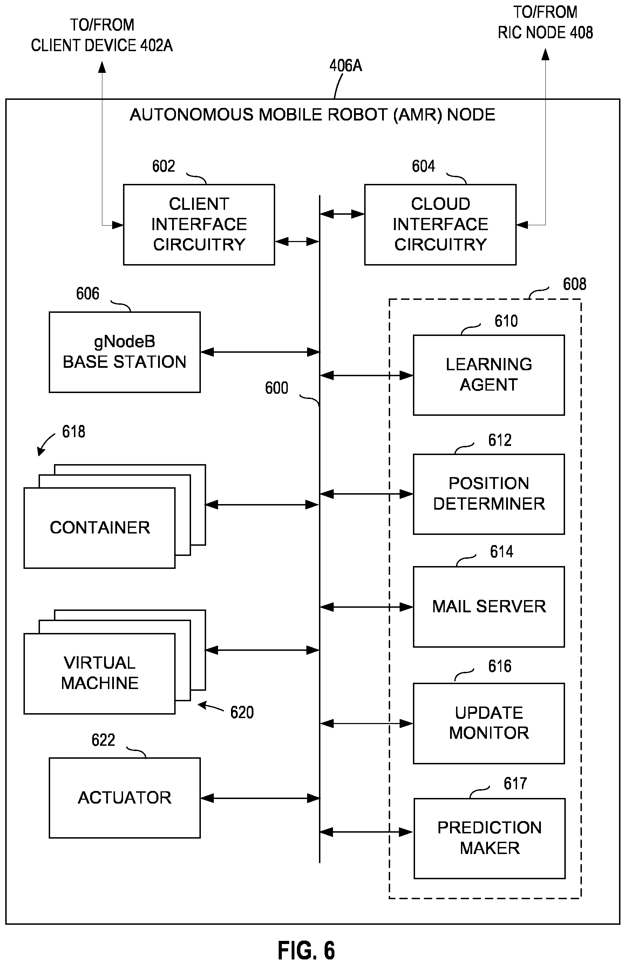

In the illustrated example, the AMR nodes 406 are configured to send and receive data wirelessly using radio waves. Accordingly, the AMR nodes 406 collectively form a Radio Area Network (RAN) that services the client devices 402. In some examples, one or more of the AMR nodes 406 include communication ports for wired data transfer. In some examples, an AMR node 406A is referred to as a mobile RAN node. Accordingly, the AMR nodes 406 are both autonomous mobile robot (AMR) nodes and autonomous mobile RAN (AMR) nodes. AMR nodes 406 are discussed further in connection with FIG. 6. In some examples, the RAN and/or edge cloud of FIG. 4 may be referred to individually or collectively as a Content Delivery Network (CDN).

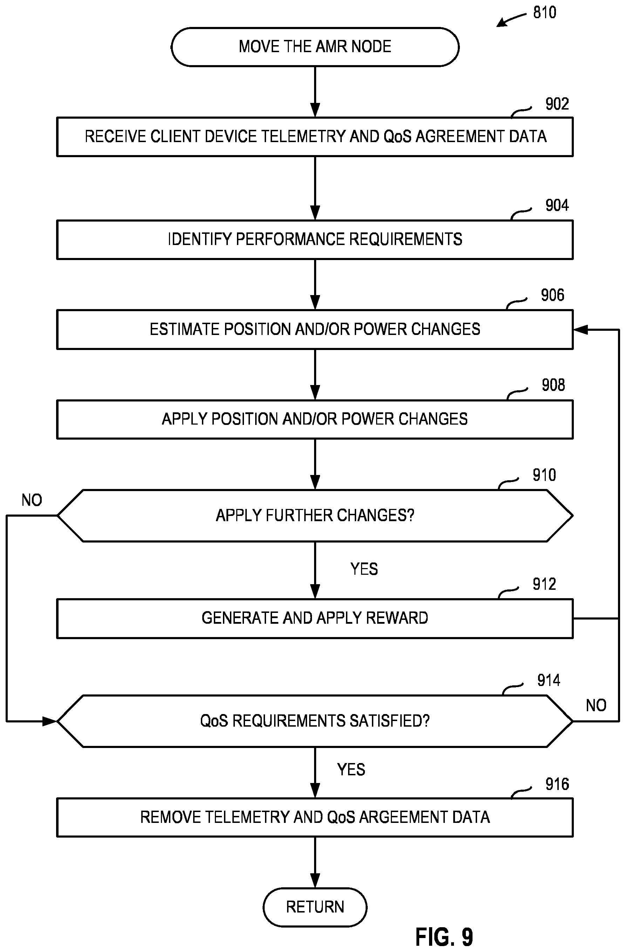

In some examples, the CDN of FIG. 4 includes means for processing workloads locally. For example, the means for processing workloads locally may be implemented by the AMR nodes 406. In some examples, the AMR nodes 406 may be instantiated by programmable circuitry such as the example programmable circuitry 1412 of FIG. 14. For instance, the AMR nodes 406 may be instantiated by the example microprocessor 1500 of FIG. 15 executing machine executable instructions such as those implemented by at least blocks 802 - 816, 902 - 916 of FIGS. 8 and 9. In some examples, the AMR nodes 406 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the AMR nodes 406 may be instantiated by any other combination of hardware, software, and/or firmware. For example, the AMR nodes 406 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The RIC node 408 monitors and coordinates the flow of data between the AMR nodes 406 and the edge cloud 110. To coordinate data transfer, the RIC node 408 connects to each of the AMR nodes 406 to receive workload requests. The RIC node 408 can also determine when to forward workload requests to the donor node 410, which of the AMR nodes 406 should service a particular client device 402A, etc. The RIC node 408 may determine when to forward requests to the donor node 410 by managing networking functions that include but are not limited to network slicing, prioritized communications, etc.

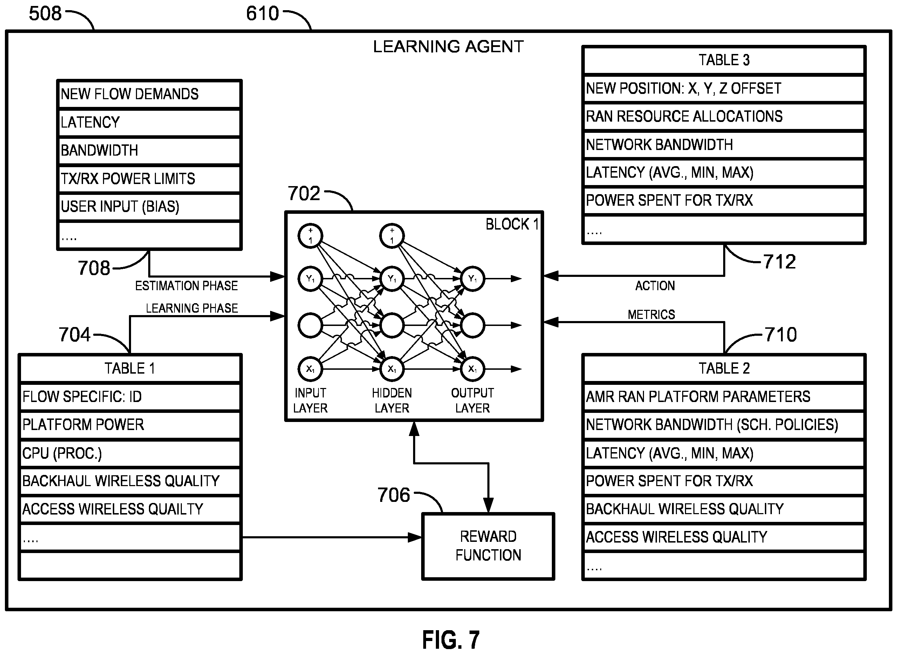

In example of FIG. 4, the RIC node 408 is located such that a connection can be made to each of the AMR nodes 406 without involving intermediate devices. In some examples, the RIC node 408 may include a real-time component located locally (with respect to the client devices 402) to facilitate real-time workloads and a non-real-time component located remotely (with respect to the client devices 402) to facilitate non-real-time workloads. The RIC node 408 controls the networking functions of Open RAN architectures (e.g., as described in specifications published by the O-RAN Alliance, a group of telecommunications industry members). As used herein, Open RAN refers to a technique to connect client devices to a core network using a disaggregated collection of devices. The example of FIG. 4 shows one RIC node 408 for simplicity. However, in some examples, any number of RIC nodes 408 may connect to the AMR nodes 406. The number of RIC nodes 408 may depend on the number and location of the AMR nodes 406. The RIC node 408 is discussed further in connection with FIGS. 7-14.

In some examples, the RAN and edge cloud of FIG. 4 includes means for coordinating workloads. For example, the means for coordinating workloads may be implemented by the RIC node 408. In some examples, the RIC node 408 may be instantiated by programmable circuitry such as the example programmable circuitry 1412 of FIG. 14. For instance, RIC node 408 may be instantiated by the example microprocessor 1500 of FIG. 15 executing machine executable instructions such as those implemented by at least blocks 802 - 808, 812B, 814 of FIG. 8. In some examples, the RIC node 408 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the RIC node 408 may be instantiated by any other combination of hardware, software, and/or firmware. For example, the RIC node 408 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In FIG. 4, the donor node 410 is an intermediate device that enables the RIC node 408 to communicate with the edge applications 404 and edge orchestrator 412 via the edge cloud 110. In some examples, the RIC node 408 includes a direct connection to the edge cloud 110 in replacement of or in addition to the illustrated direct connection to the donor node 410. The donor node 410 is an example implementation of a Donor Evolved Node B (DeNB) as described by the 3GPP 36.300 Specification.

In some examples, the CDN of FIG. 4 includes means for forwarding workloads. For example, the means for forwarding workloads may be implemented by donor node 410. In some examples, the donor node 410 may be instantiated by programmable circuitry such as the example programmable circuitry 1412 of FIG. 14. For instance, the donor node 410 may be instantiated by the example microprocessor 1500 of FIG. 15 executing machine executable instructions such as those implemented by at least blocks 812B, 814 of FIG. 8. In some examples, the donor node 410 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the donor node 410 may be instantiated by any other combination of hardware, software, and/or firmware. For example, the donor node 410 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The edge orchestrator 412 mediates requests from the client devices 402 and manages resources of the edge applications 404. The edge orchestrator 412 controls resources of the edge applications 404 through a variety of operations, including but not limited to provisioning services, making decisions on behalf of the client devices 402 when applicable, coordinating automated tasks, and generally helping to efficiently complete workloads throughout the network.

In some examples, the RAN and edge cloud of FIG. 4 includes means for coordinating applications. For example, the means for coordinating applications may be implemented by edge applications 404. In some examples, the edge applications 404 may be instantiated by programmable circuitry such as the example programmable circuitry 1412 of FIG. 14. For instance, the edge applications 404 may be instantiated by the example microprocessor 1500 of FIG. 15 executing machine executable instructions such as those implemented by at least blocks 812B, 814 of FIG. 8. In some examples, the edge applications 404 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the edge applications 404 may be instantiated by any other combination of hardware, software, and/or firmware. For example, the edge applications 404 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

Each of the client devices 402, the edge applications 404, the AMR nodes 406, the RIC node 408, donor node 410, edge cloud 110, and edge orchestrator 412 may include any suitable hardware components, including but not limited to interface circuitry, memory, and programmable circuitry. Examples of programmable circuitry include but are not limited to programmable microprocessors, Field Programmable Gate Arrays (FPGAs) that may instantiate instructions, Central Processor Units (CPUs), Graphics Processor Units (GPUs), Digital Signal Processors (DSPs), XPUs, or microcontrollers and integrated circuits such as Application Specific Integrated Circuits (ASICs). The hardware components of FIG. 4 are discussed further in connection with FIG. 14 - 16.

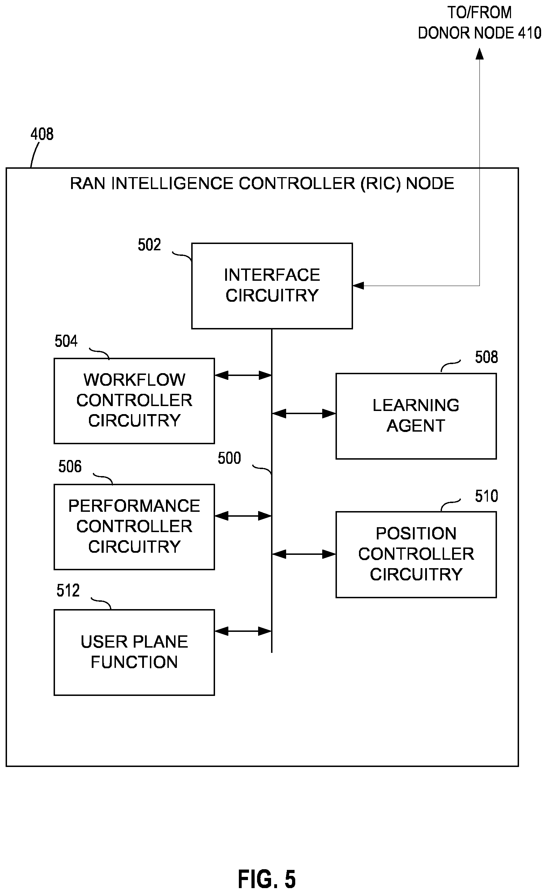

FIG. 5 is a block diagram of an example implementation of the RIC node 408 of FIG. 4. The RIC node 408 of FIG. 4 may be instantiated (e.g., creating an instance of, bring into being for any length of time, materialize, implement, etc.) by programmable circuitry such as a Central Processor Unit (CPU) executing first instructions. Additionally or alternatively, the RIC node 408 of FIG. 4 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 4 may, thus, be instantiated at the same or different times. Some or all of the circuitry of FIG. 4 may be instantiated, for example, in one or more threads executing concurrently on hardware and/or in series on hardware. Moreover, in some examples, some or all of the circuitry of FIG. 4 may be implemented by microprocessor circuitry executing instructions and/or FPGA circuitry performing operations to implement one or more virtual machines and/or containers. The RIC node 408 includes an example bus 500, example interface circuitry 502, example workflow controller circuitry 504, example performance controller circuitry 506, an example learning agent 508, example position controller circuitry 510, and example user plane function (UPF) circuitry 512.

The bus 500 refers to one or more physical connections (e.g., an interconnect, copper trace, etc.) that enables the exchange of data between the internal components of the RIC node 408. The bus 500 may be implemented using one or more communication systems that meet threshold power and/or latency requirements.

The interface circuitry 502 enables the exchange of data between the internal components of the RIC node 408 and other devices in the RAN of FIG. 4. For example, the interface circuitry 502 may receive a workload request from an AMR node 406A and provide the request to the workflow controller circuitry 504 via the bus 500. Later, the interface circuitry 502 may receive a result of the workload from the donor node 410 and forward the result to an AMR node 406A. The interface circuitry 502 may include any transceivers, antennas, and other components required to send and receive radio signals in a RAN following 3GPP protocols. In some examples, the interface circuitry 502 is instantiated by programmable circuitry executing interface instructions and/or configured to perform operations such as those represented FIGS. 8-11.

The workflow controller circuitry 504 determines how to coordinate the position and operation of the AMR nodes 406 based on the various QoS agreements of the client devices 402. To coordinate AMR nodes 406, the workflow controller circuitry 504 communicates with the performance controller circuitry 506 to determine whether the exchange of data for a particular client device 402A satisfies a corresponding QoS agreement. Upon identification of a QoS agreement that is not satisfied or at risk of not being satisfied, the workflow controller circuitry 504 notifies the position controller circuitry 510 to prompt one of the AMR nodes 406 to move to another location. The workflow controller circuitry 504 may additionally or alternatively notify the UPF 512 upon identification of a failing QoS agreement to trigger local processing of the workload. In some examples, the workflow controller circuitry 504 is instantiated by programmable circuitry executing workflow controller instructions and/or configured to perform operations such as those represented by FIGS. 8 - 11.

In some examples, one or more of the AMR nodes 406 need a particular amount of bandwidth at a particular amount of time in order to properly service the client devices 402. However, if the AMR nodes 406 are not working together to understand current bandwidth requirements across the RAN of FIG. 4, time sensitive bandwidth control may be impracticable.

In some such examples, the workflow controller circuitry 504 acts as bandwidth broker at a granular level. The workflow controller circuitry 504 coordinates bandwidth requirements for the different AMR nodes 406 sharing the current spectrum and backhaul connectivity.

As an example, suppose the CDN of FIG. 4 implements different levels of priority traffic (e.g., from 1 to 10). Suppose further that each priority level is mapped into a different 5G slice. At any point in time, any of the AMR nodes 406 may transmit a traffic requirement to the RIC node 408. In some examples, an AMR node 406A may transmit one traffic requirement per prioritization level. Such a prioritization may be implemented in different layers of the protocol stack.

The workflow controller circuitry 504, based on the different traffic requirements, the amount of bandwidth available within the RAN, and the backhaul connectivity, computes the actual amount bandwidth that can be secured to each AMR node. In some examples, the workflow controller circuitry 504 attempts to guarantee the top *n* prioritization levels will have a set bandwidth. In such examples, the workflow controller circuitry 504 provides the rest of the prioritization levels with the largest amount of bandwidth available after the top prioritization levels have been allocated.

After the bandwidth allocation, the workflow controller circuitry 504 causes the interface circuitry 502 to notify one or more of the AMR nodes 406 to describe which n prioritization levels have guaranteed bandwidth and to provide the allocated bandwidth values. The RIC node 408 may also provide an estimation on the amount of bandwidth mapping so that an AMR node 406A can throttle or control the bandwidth demand.

The performance controller circuitry 506 determines when to transmit various workloads to the donor node 410 such that the QoS agreements of the client devices 402 are satisfied. The performance controller circuitry 506 may implement network functions such as network slicing and prioritized communications to satisfy multiple different QoS agreements concurrently. The performance controller circuitry 506 also measures network performance metrics that are used to determine whether the QoS agreements are being met. The measured network performance metrics may include but are not limited to transmission delay, bit rate, packet loss, jitter, throughput, etc. In some examples, the performance controller circuitry 506 is instantiated by programmable circuitry executing performance controller instructions and/or configured to perform operations such as those represented by operations such as those represented by FIGS. 8-11.

The learning agent 508 is a machine learning (ML) model that estimates a location for an AMR node 406A to move to. In some examples, the location estimated by the learning agent 508 is predicted to improve one or both of (a) connectivity between the AMR node 406A and a client device 402A, and (b) connectivity between the AMR node 406A and the RIC node 408, thereby improving performance metrics and potentially satisfying a QoS agreement. The learning agent 508 uses telemetry data of the AMR node 406A, telemetry data of the client device 402A, and the QoS agreement of the client device 402A as inputs to the ML model. In examples described herein, the learning agent 508 is a neural network that uses reinforcement learning to reward and train the model. In some examples, the learning agent 508 uses a different artificial intelligence (AI) and/or ML model to estimate location. In some examples, the learning agent 508 is instantiated by programmable circuitry executing learning agent instructions and/or configured to perform operations such as those represented by FIGS. 7-11.

The position controller circuitry 510 prevents or permits the AMR nodes 406 from self-positioning. In some examples, self-positioning occurs when the estimated location for an AMR node 406A is calculated by that same AMR node 406A that will move to the estimated location. In contrast, remote positioning occurs when the estimated location is calculated on a device other than the moving AMR node 406A (such as the learning agent 508 on the RIC node 408). In some examples, the position controller circuitry 510 may prevent an AMR node 406C from self-positioning if the performance controller circuitry 506 indicates the QoS agreements of the client devices 402C, 402D being serviced by the AMR node 406 are being satisfied. In some examples, the position controller circuitry 510 may permit an AMR node 406C from self-positioning if the performance controller circuitry 506 indicates one or more QoS agreements of the client devices 402C, 402D being serviced by the AMR node 406 are not being satisfied or are at risk of not being satisfied. In some examples, the position controller circuitry 510 is instantiated by programmable circuitry executing position controller instructions and/or configured to perform operations such as those represented by FIGS. 7 - 11.

The UPF 512 facilitates the processing of a workload locally at the AMR nodes 406 rather than remotely at the edge applications 404. The UPF 512 may cause local processing of workloads based on a determination that a backhaul connection has degraded such that the traditional forwarding of workloads to the edge applications 404 will not satisfy a QoS agreement. The UPF 512 is an example implementation of a virtual network function as described in the with 3GPP 29.44 Specification. In some examples, the UPF 512 is instantiated by programmable circuitry executing UPF instructions and/or configured to perform operations such as those represented by FIGS. 8-11.

The example RIC node 408 includes performance controller circuitry 506 and workflow controller circuitry 504 to measure performance characteristics and monitor QoS agreement compliance, respectively. When a QoS agreement is not being met or is at risk of not being met, the RIC node 408 may enable self-positioning and/or local workload processing on one or more AMR nodes 406. Such techniques enable the RIC node 408 to continue satisfying QoS agreements in adverse conditions (e.g., when connectivity with a client device 402A suffers or when backhaul connectivity suffers). As a result, RANs implemented with the RIC node 408 and AMR nodes 406 of FIG. 4 offer stronger reliability than alternate networks.

FIG. 6 is a block diagram of an example implementation of an AMR node 406A of FIG. 4. The AMR node 406A of FIG. 4 may be instantiated (e.g., creating an instance of, bring into being for any length of time, materialize, implement, etc.) by programmable circuitry such as a Central Processor Unit (CPU) executing first instructions. Additionally or alternatively, the AMR node 406A of FIG. 4 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 4 may, thus, be instantiated at the same or different times. Some or all of the circuitry of FIG. 4 may be instantiated, for example, in one or more threads executing concurrently on hardware and/or in series on hardware. Moreover, in some examples, some or all of the circuitry of FIG. 4 may be implemented by microprocessor circuitry executing instructions and/or FPGA circuitry performing operations to implement one or more virtual machines and/or containers.

While FIG. 4 refers to the AMR node 406A individually, the other AMR nodes 406B, 406C may be implemented using the same components and configurations described in FIG. 4. The AMR node 406A includes an example bus 600, example client interface circuitry 602, example cloud interface circuitry 604, an example gNodeB base station 606, example local applications 608, example containers 618, example virtual machines 620, and an example actuator 622. The local applications 608 include but are not limited to an example learning agent 610, an example position determiner 612, an example mail server 614, an example update monitor 616, and an example prediction maker 617.

The bus 600 refers to one or more physical connections (e.g., an interconnect, copper trace, etc.) that enables the exchange of data between the internal components of the AMR node 406A. The bus 600 may be implemented using one or more communication systems that meet threshold power and/or latency requirements.

The client interface circuitry 602 enables the exchange of data between the internal components of an AMR node and client devices serviced by the AMR node. For example, the AMR node 406A services the client device 402A by receiving workloads from the client device, forwarding the workloads or locally processing the workloads, moving to a location with better connectivity, and generally keeping the QoS agreement of the client device 402A maintained. In some examples, the client interface circuitry 602 uses to authentication and/or permission data to verify a given device is allowed to communicate within the CDN of FIG. 4.

The client interface circuitry 602 may include any transceivers, antennas, and other components required to send and receive radio signals in a 5G enabled RAN. In some examples, the client interface circuitry 602 is instantiated by programmable circuitry executing client interface instructions and/or configured to perform operations such as those represented FIGS. 7, 9 - 11.

The cloud interface circuitry 604 enables the exchange of data between the internal components of an AMR node and the edge cloud 110. In the example of FIG. 4, the connection between the cloud interface circuitry 604 and the edge cloud 110 is enabled by intermediate devices including the RIC node 408 and the donor node 410. The client interface circuitry 602 and the cloud interface circuitry 604 operate independently of one another. The cloud interface circuitry 604 may include any transceivers, antennas, and other components required to send and receive radio signals in a 5G enabled RAN following. In some examples, the cloud interface circuitry 604 is instantiated by programmable circuitry executing client interface instructions and/or configured to perform operations such as those represented FIGS. 7,9-11.

The gNodeB base station 606 facilitates the exchange of information in accordance with the 3GPP 33.511 Specification. The 5G RAN protocols may include the physical layer (PHY), Media Access Control (MAC), Radio Link Control (RLC), Packet Data Convergence Protocol (PDCP), Service Data Adaptation Protocol (SDAP), radio resource control (RRC), Random Access Preamble (RAP), etc. In some examples, the gNodeB base station 606 is instantiated by programmable circuitry executing gNodeB instructions and/or configured to perform operations such as those represented by the flowchart(s) of FIGS. 7 - 14.

The local applications 608 are software applications implemented locally (e.g., implemented on the AMR node 406A). While FIG. 6 shows five local applications 608, the AMR node 406A may implement any number of local applications 608 in practice. In some examples, one or more of the local applications 608 are instantiated by programmable circuitry executing local application instructions and/or configured to perform operations such as those represented by the flowchart(s) of FIGS. 7 - 14.

Within the local applications 608, the learning agent 610 is an implementation of the learning agent 508 on the AMR node 406A. That is, one or both of the RIC node 408 or the AMR node 406A may train an ML model to estimate a new location for the AMR node 406A as described above.

Within the local applications 608, the position determiner 612 executes the learning agent model to a determine a new location for the AMR node 406A. In some examples, the position determiner 612 of the AMR node 406A is restricted to executing the learning agent model when permitted to do so by the position controller circuitry 510 of the RIC node 408.

Within the local applications 608, the mail server 614, the update monitor 616, and the prediction maker 617 are examples of edge applications 404 that are configured to execute locally on the AMR node 406A. In some examples, the AMR node 406A is configured to implement different edge applications locally. To implement edge applications on the AMR node 406A, the cloud interface circuitry 604 communicates with the edge applications 404 to exchange resource availability, workload descriptions, and other metadata as described further in connection with FIGS. 8-11.

Within the local applications, the prediction maker 617 is an application that makes predictions about a particular workload. The prediction is the output of a machine learning model that is executed by the AMR node 406A during periods of backhaul connectivity loss (and executed by one of the edge applications 404 when the backhaul connection is active). The machine learning model may use any number of inputs to make a prediction about a workload, including but not limited to the workload itself, telemetry data of the client devices 402, telemetry data from the other AMR nodes 406B, 406C, etc. In some examples, client devices 402 rely on predictions from other devices to allocate resources, determine dependencies between workloads, etc. In such examples, the local execution of the prediction maker 617 on the AMR nodes 406 means that client devices 402 will continue receiving predictions even when the edge applications 404 are offline.

The AMR node 406A implements one or more of the local applications 608 using the containers 618 and/or the virtual machines 620. The containers 618 refer to the representation of software resources such as applications, binaries, and libraries as separate entities. However, containers 618 collectively view the operating system and hardware components of the AMR node 406A as shared resources. In contrast, the virtual machines 620 refer to the representation of both the hardware and software resources within the AMR node 406A as separate entities.

The actuator 622 refers to one or more components that exert mechanical force and cause the AMR node 406A to physically move. The actuator 622 may be implemented as gears, axles, wheels, rotors, blades, etc., depending on the type of movable device that implements the AMR node 406A. The actuator 622 may connect to programmable circuitry that receives a new location from the position determiner 612 (or from the RIC node 408 via the cloud interface circuitry 604) and determines which mechanical forces should be applied to achieve the necessary movement.

The AMR node 406A includes a gnodeB base station 606 to forward workloads to the edge applications 404 when the backhaul connection exhibits performance metrics that are sufficient to satisfy a QoS agreement. The AMR node 406A also includes local applications 608, containers 618, virtual machines 620, and the actuator 622, enabling the AMR node 406A to process workloads locally (e.g., execute the mail server 614 or update monitor 616) and/or move locations when the backhaul connection fails to satisfy the QoS agreement. In some examples, one or more of the AMR nodes 406 may be referred to as an Internet cache because the local processing of workloads on AMR nodes 406 can keep client devices 402 connected to an Internet service when the backhaul connection is weakened and/or lost. As a result, RANs implemented with the RIC node 408 and AMR nodes 406 of FIG. 4 offer stronger reliability than alternate networks.

FIG. 7 is a block diagram describing an example implementation of the learning agent 508 of FIG. 5 and the learning agent 610 of FIG. 6. Examples described above and herein show the learning agent of FIG. 7 implemented in both the AMR node 406A and the RIC node 408. In some examples, the learning agent of FIG. 7 is implemented in only one of the AMR node 406A or the RIC node 408. The learning agent 508, 610 includes an example neural network model 702, an example learning phase 704, am example reward function 706, an example estimation phase 708, example output metrics 710, and example output actions 712.

Artificial intelligence (AI), including machine learning (ML), deep learning (DL), and/or other artificial machine-driven logic, enables machines (e.g., computers, logic circuits, etc.) to use a model to process input data to generate an output based on patterns and/or associations previously learned by the model via a training process. For instance, the model may be trained with data to recognize patterns and/or associations and follow such patterns and/or associations when processing input data such that other input(s) result in output(s) consistent with the recognized patterns and/or associations.

Many different types of machine learning models and/or machine learning architectures exist. In examples disclosed herein, the neural network model 702 is used. Using the neural network model 702 enables the learning agent 508, 610 to form complex relationships between large sets of inputs and outputs using activation functions, weights, and hidden layers. In some examples, machine learning models/architectures that are suitable to use in the example approaches disclosed herein will be neural networks. However, other types of machine learning models could additionally or alternatively be used such as linear regressions, k-nearest neighbors, support vector machines, random forest classifiers, decision trees, etc.

In general, implementing a ML/AI system involves two phases, a learning/training phase and an estimation phase. In the learning phase 704, a training algorithm is used to train a model to operate in accordance with patterns and/or associations based on, for example, training data. In general, the model includes internal parameters that guide how input data is transformed into output data, such as through a series of nodes and connections within the model to transform input data into output data. In the learning agent 508, 610, the training data used in the learning phase 704 includes but is not limited to an identification of a particular client device 402A, available power resources on the AMR node 406A, available processing power on the AMR node 406A, connectivity metrics of the backhaul connections, connectivity metrics between the client device 402A and the AMR node 406A, etc. as described in Table 1 of FIG. 7.

Additionally, hyperparameters are used as part of the training process to control how the learning is performed (e.g., a learning rate, a number of layers to be used in the machine learning model, etc.). Hyperparameters are defined to be training parameters that are determined prior to initiating the training process.

Different types of training may be performed based on the type of ML/AI model and/or the expected output. For example, supervised training uses inputs and corresponding expected (e.g., labeled) outputs to select parameters (e.g., by iterating over combinations of select parameters) for the ML/AI model that reduce model error. As used herein, labelling refers to an expected output of the machine learning model (e.g., a classification, an expected output value, etc.)

In examples used herein, the learning agent 508, 610 trains the neural network model 702 by evaluating the reward function 706. After an iteration of the neural network model 702, one or more weights in the output layer of the network are changed. The learning agent 508, 610 then compares a first sum of products to a second sum of products to evaluate the reward function 706. The first sum of products include the output layer weights and their corresponding activation functions as produced by the neural network model 702, while the second sum of products include an expected set of output layer weights and activation functions. The expected set of output layer weights may describe performance metrics that, if achieved, would increase the probability of satisfying a QoS agreement. If the first sum of products is greater than the second sum of products, the reward function 706 increases a reward value to indicate the changes made in the previous iteration of the neural network model 702 were beneficial. Alternatively, if the second sum of products is greater than the first of products, the reward function 706 decreases the reward value to indicate the changes made in the previous iteration of the neural network model 702 were detrimental.

While examples described herein refer to the reward function 706, any other training algorithm may additionally or alternatively be used. In examples disclosed herein, training is performed until the reward value of the reward function 706 meets or exceeds a threshold value. In examples disclosed herein, training is performed at either the AMR node 406A or the RIC node 408. Training is performed using hyperparameters that control how the learning is performed (e.g., a learning rate, a number of layers to be used in the machine learning model, etc.). In some examples retraining may be performed. Such re-training may be performed in response to AMR node 406A being re-assigned to a different client device.

Once training is complete, the model is deployed for use as an executable construct that processes an input and provides an output based on the network of nodes and connections defined in the model. The model is stored within a memory of the AMR node 406A or a memory of the RIC node 408. The model may then be executed by the position determiner 612 on the AMR node 406A. In some examples, if the neural network model 702 is trained on the RIC node 408, the RIC node 408 transmits the model to the AMR node 406A before execution. Additionally or alternatively, the model may be executed on the RIC node 408.

Once trained, the deployed model may be operated in the to process data. In the estimation phase 708, data to be analyzed (e.g., live data) is input to the neural network model 702 trained by the learning agent 508, 610, and the position controller circuitry 510 executes to create an output. This estimation phase can be thought of as the AI "thinking" to generate the output based on what it learned from the training (e.g., by executing the model to apply the learned patterns and/or associations to the live data). In some examples, input data undergoes pre-processing before being used as an input to the machine learning model. Moreover, in some examples, the output data may undergo post-processing after it is generated by the AI model to transform the output into a useful result (e.g., a display of data, an instruction to be executed by a machine, etc.). The live data used in the estimation phase 708 may include, but is not limited to, telemetry data from one or more the client devices 402 and AMR nodes 406, user inputs from the one or more client devices 402, changes to a QoS agreement, network performance characteristics such as bandwidth, and power transmission limitations, etc.

In examples described herein, the neural network model 702 produces both output metrics 710 and output actions 712. The output metrics 710 characterize the estimated network connectivity of the AMR node 406A after a change in location and/or power occurs. The output metrics 710 may include but are not limited to network bandwidth, latency, power, and other parameters that describe: (a) the connectivity between the client device 402A and the AMR node 406A, and (b) the connectivity between the AMR node 406A and the RIC node 408, as detailed in Table 2 of FIG. 7.

The output actions 712 characterize the changes the AMR node 406A makes to service the client device 402A. The output actions 712 may include but are not limited to a new location, an amount of power to use when transmitting and receiving data, a network request to negotiate a bandwidth assignment with the RIC node 408 or other nodes in the RAN of FIG. 4, etc., for as detailed in Table 3 of FIG. 7. The new location estimation may be represented by any suitable format such as geographical coordinates, an offset in the, x, y, and/or z dimensions from the current location, etc. By executing the neural network model 702, the position determiner 612 estimates that the performance of the output actions 712 will cause the AMR node 406A to increase the quality of network connectivity as described by the output metrics 710.

The output actions 712 may additionally enable the AMR node 406A to negotiate with other AMR nodes 406B, 406C to determine a position that enables the RAN as a whole to mitigate interferences for transmissions and receptions. For example, the AMR node 406A may determine a new position such that there is spatial multiplexing for independent beams between both: (a) the client device 402A and the AMR node 406A, and (b) the AMR node 406A and the RIC node 408.

The output actions 712 may also cause the AMR node 406A to determine a new position based on a change in resource allocation. For example, the AMR node 406A may move closer to the client device 402A based on the client device 402A indicating it needs to conserve battery power, or when the client device 402A requests a high data rate for one or more workloads. In contrast, the AMR node 406A may move closer to a device implementing the backhaul connection (e.g., the RIC node 408) based on the client device 402 having a higher power budget than the AMR node 406A, thereby conserving power on the AMR node 406A.

In some examples, output of the deployed model may be captured and provided as feedback. By analyzing the feedback, the accuracy of the deployed model can be determined. If the feedback indicates that the accuracy of the deployed model is less than a threshold or other criterion, training of an updated model can be triggered using the feedback and an updated training data set, hyperparameters, etc., to generate an updated, deployed model.

While an example manner of implementing the AMR nodes 406 and the RIC node 408 are illustrated in FIGS. 5 and 6, one or more of the elements, processes, and/or devices illustrated in FIGS. 5 and 6 may be combined, divided, re-arranged, omitted, eliminated, and/or implemented in any other way. Further, the bus 500, interface circuitry 502, workflow controller circuitry 504, performance controller circuitry 506, learning agent 508, position controller circuitry 510, and UPF 512, bus 600, client interface circuitry 602, cloud interface circuitry 604, gNodeB base station 606, local applications 608, containers 618, virtual machines 620, and/or, more generally, the example AMR nodes 406 and the RIC node 408 of FIGS. 5 and 6, may be implemented by hardware alone or by hardware in combination with software and/or firmware. Thus, for example, any of the bus 500, interface circuitry 502, workflow controller circuitry 504, performance controller circuitry 506, learning agent 508, position controller circuitry 510, and UPF 512, bus 600, client interface circuitry 602, cloud interface circuitry 604, gNodeB base station 606, local applications 608, containers 618, virtual machines 620, and/or, more generally, the example AMR nodes 406 and the RIC node 408, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example AMR nodes 406 and the RIC node 408 of FIGS. 5 and 6 may include one or more elements, processes, and/or devices in addition to, or instead of, those illustrated in FIGS. 5 and 6, and/or may include more than one of any or all of the illustrated elements, processes and devices.

Flowchart(s) representative of example machine readable instructions, which may be executed by programmable circuitry to implement and/or instantiate the AMR nodes 406 and the RIC node 408 of FIGS. 5 and 6 and/or representative of example operations which may be performed by programmable circuitry to implement and/or instantiate the AMR nodes 406 and the RIC node 408 of FIGS. 5 and 6, are shown in FIGS. 8-11. The machine readable instructions may be one or more executable programs or portion(s) of one or more executable programs for execution by programmable circuitry such as the programmable circuitry 1412 shown in the example programmable circuitry platform 1400 discussed below in connection with FIG. 14 and/or may be one or more function(s) or portion(s) of functions to be performed by the example programmable circuitry (e.g., an FPGA) discussed below in connection with FIGS. 15 and/or 16. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, read only memory (ROM), a solid-state drive (SSD), SSD memory, nonvolatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 8-11, many other methods of implementing the example AMR nodes 406 and the RIC node 408 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 8-11 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or operations, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or operations, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 8 is a flowchart representative of example machine readable instructions and/or example operations 800 that may be executed, instantiated, and/or performed by programmable circuitry to maintain a QoS agreement. While the flowchart of FIG. 8 refers to AMR node 406A for simplicity, the operations described in connection with FIG. 8 may additionally or alternatively include any of the other AMR nodes 406B, 406C.

The example machine-readable instructions and/or the example operations 800 begin when the edge orchestrator 412, the RIC node 408, and the AMR node 406A establish offline functionality for the AMR node 406A. (Block 802). As used above and herein, offline refers to a period in which any part of the backhaul connection between the AMR node 406A and the edge applications 404 becomes unavailable or degrades to the point where a QoS agreement can no longer be satisfied if workloads are offloaded to the edge applications 404. To establish offload functionality in block 802, the AMR node 406A and edge orchestrator 412 exchange resource availability data, workload descriptions, and other metadata as described further in connection with FIG. 8.

The edge orchestrator 412, the RIC node 408, the AMR node 406A, and the client device 402A establish offline functionality for the client device 402 application that generates workloads. (Block 804). To establish offline functionality for the client device application, the client interface circuitry 602 establishes a radio bearer instance dedicated to the client device 402A and one of the edge applications 404 provides offline application information as described further in connection with FIGS. 8 and 9.

The interface circuitry 502 of the RIC node 408 receives a workload. (Block 806). The workload is generated by one of the client devices 402 and is forwarded to the RIC node 408 by the AMR node 406A. The workload can request any type of operations performable by the edge applications 404.

Upon receiving the workload, the workflow controller circuitry 504 determines if current network connections would satisfy the QoS agreement of the client device 402A. (Block 808). The QoS agreement of block 808 describes network performance metrics the RAN and edge cloud 110 of FIG. 4 to be met if the workload is offloaded to the edge application for execution. To determine if network connections can be used to satisfy a QoS agreement, the performance controller circuitry 506 measures the quality of the direct connection between the AMR node 406A and the next intermediate device (e.g., the RIC node 408). The performance controller circuitry 506 may additionally evaluate the quality of the connection between the client device 402A and the AMR node 406A, the quality of the connection between the RIC node 408 and the donor node 410, and the quality of any connection in the RAN or edge cloud 110 of FIG. 4 for which data is available.

In the illustrated example, if the workflow controller circuitry 504 determines the current network connections would not satisfy the QoS agreement (Block 808: No), the AMR node 406A moves to a new location. (Block 810). The RIC node 408 may implement block 810 if, at block 808, the workflow controller circuitry 504 determines one or more of (a) connectivity between the client device 402A and the AMR node 406A, and (b) connectivity between the AMR node 406A and the RIC node 408, can be improved by moving the AMR node 406A to the new location. Block 810 is discussed further in connection with FIG. 9.

If the workflow controller circuitry 504 determines the current network connections would not satisfy the QoS agreement (Block 808: No), the UPF 512 additionally or alternatively causes the AMR node 406A to process the workload locally (Block 812A). The AMR node 406A processes the workload locally by communicating with the client device 402A via the client interface circuitry 602, and by using the offline resource information obtained in blocks 802, 804. During periods of local processing, the client interface circuitry 602 may use authentication and/or permission data stored in memory of the AMR node 406A to verify external communications. Accordingly, the AMR node 406A will refrain from processing workloads for unauthorized devices even when a device that typically performs verification (e.g., the RIC node 408 or another device in the backhaul connection) is unavailable.

The AMR node 406A uses the cloud interface circuitry 604 to synchronize with the edge application(s) 404 once the network connectivity is restored and/or is strong enough to support the QoS agreement. (Block 812B). The synchronization causes the edge application(s) 404 to complete the processing of the workload received at block 806.

If the workflow controller circuitry 504 determines the current network connections would satisfy the QoS agreement (Block 808: Yes), the AMR node 406A and the RIC node 408 facilitate an exchange of workload data between the client device 402A and the corresponding edge application(s) 404. (Block 814). Facilitating an exchange of workload data may cause the RIC node 408 to prioritize and/or package the workload request of the client device 402A amongst workload requests from other client devices 402B, 402C, 402D, 402E. The exchange of workload data additionally includes the transmission of a result of the workload from the edge application(s) 404 back to the client device 402A.

The AMR node 406A and RIC node 408 facilitate workload data exchange in block 814 because in general, the edge application(s) 404 have more resources than the AMR node 406A and are therefore better suited to process workloads and satisfy QoS agreements on a long term basis. However, if one or more network connections degrade or fail, the AMR nodes 406 can process workloads on a temporary basis and/or move to a different location that improves the network connection. As a result, networks with the AMR nodes 406 and RIC node 408 are resilient to network connectivity issues and can reliably satisfy QoS agreements.

FIG. 9 is a flowchart representative of example machine readable instructions and/or example operations that may be executed, instantiated, and/or performed by example programmable circuitry to cause an AMR node to move as described in connection with FIG. 8. Specifically, FIG. 9 provides an example implementation of block 810 of FIG. 8.

Execution of block 810 begins when the client interface circuitry 602 receives client device telemetry data. (Block 902). The telemetry data may include but is not limited to the specific QoS agreement used by the client device 402A, power constraints, and other wireless characteristics that describe how the client device 402A exchanges data within the RAN of FIG. 4.

The position determiner 612 identifies performance requirements based on the telemetry data. (Block 904). The performance requirements may be listed directly within or referred from any of the telemetry data, including the QoS agreement.

The position determiner 612 executes the neural network model 702 to estimate the position and power changes. (Block 906). The position determiner 612 uses the telemetry data and identified requirements as inputs to the neural network model 702 as described in connection with the estimation phase 708 of FIG. 7.

The AMR node 406A applies the position and power changes. (Block 908). To apply a position change, the actuator 622 may apply one or more mechanical forces to a component, causing the AMR node 406A to move. To apply a power change, the position determiner 612 may cause the power delivery system, transceiver, programmable circuitry, and/or other components used to implement the client interface circuitry 602 and/or cloud interface circuitry 604 to change an amount of power used to transmit and receive data.

The position determiner 612 determines whether to apply further changes. (Block 910). The position determiner 612 makes the decision of block 910 based on the metrics 710 as described above in Table 2 of FIG. 7. For example, the position determiner 612 may use the client telemetry data of block 902 and performance requirements of block 904 to determine both: (a) a change in position, and (b) a change in bandwidth are needed to satisfy the QoS agreement of block 902. If an initial iteration of blocks 906 and 908 only produces a change in bandwidth, the position determiner 612 determines at block 901 that further changes are needed.

If the position determiner 612 decides to apply further changes (Block 910: Yes), the position determiner 612 generates and applies a reward. (Block 912). The reward is generated by evaluating the rewards function 706 with the output metrics 710 and updating a reward value as described above in connection with FIG. 7. Application occurs when the new reward value is used an input when the neural network model 702 is executed in a subsequent iteration. Control returns to block 906 after execution of block 912, where the neural network model 702 is executed again to produce new outputs.

If the position determiner 612 decides not to apply further changes (Block 910: No), the AMR node 406A determines whether the changes of block 908 have satisfied the QoS agreement of the client device 402A. (Block 914). To determine if the QoS agreement is satisfied, the update monitor 616 measures: (a) connectivity between the AMR node 406A and the client device 402A, and (b) connectivity between the AMR node 406A and the RIC node 408 and compares the connectivity metrics to expected metrics within the QoS agreement.

If the AMR node 406A determines the QoS agreement is not satisfied (Block 912: No), control returns to block 906, where the neural network model 702 is executed again to produce new outputs. If the QoS agreement is satisfied (Block 912: Yes), the AMR node 406A removes the client device telemetry and QoS agreement data. (Block 916). Data specific to the client device 402A is removed from the memory of the AMR node 406A so that future actions of the AMR node 406A are not made with respect to the client 402A. Through this manner, the AMR node 406A can continue to provide application specific network optimization to a particular client device on a case-by-case basis. Removing data specific to a previous client device also prevents the AMR node 402A from attempting to improve the network performance of all client devices 402 simultaneously. Such an attempt at global optimization can be computationally expensive and is generally ineffective due to the varying and competing demands of client devices 402. Control returns to block 812A or block 816 after execution of block 916.

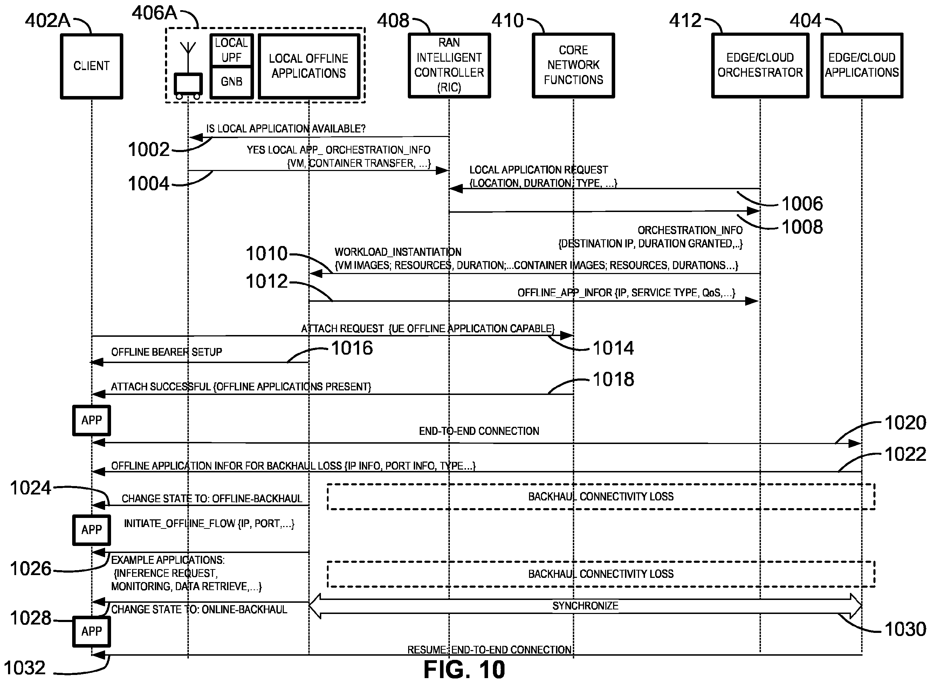

FIG. 10 is an illustrative example of communications between a user device, RAN node, RIC, and edge application of FIG. 4 to initialize online communications and to transition to offline communications. FIG. 10 includes the example client device 402A, the example AMR node 406A, the example RIC node 408, the example edge orchestrator 412, the example edge applications 404, and example operations 1002 - 1032.

In the operations 1002, the RIC node 408 transmits an inquiry to the AMR node 406A to determine whether the AMR node 406A is available to execute local applications. In the operations 1004, the AMR node confirms it is available to host local applications and provides orchestration information to the RIC node 408. Orchestration information refers to data usable by the edge orchestrator 412 to enable one or more of the edge applications 404 to run on the AMR node 406A. The orchestration information of operation 1004 may include but is not limited to a description of the containers 618 and virtual machines 620. In some examples, the RIC node 408 repeats the operations 1002 and sends an inquiry to one or more of the client devices 402. In such examples, the RIC can develop a database of information that describes the availability of the AMR nodes 406 to host local applications.

In the operation 1006, the edge orchestrator 412 transmits a request for local application information to the RIC node 408. The RIC node 408 responds in operation 1008 by providing the edge orchestrator 412 with the orchestration information obtained in operation 1004. The RIC node 408 may provide additional or alternative information in operation 1008. The additional or alternative information may include a destination Internet Protocol (IP) address, a duration of time the AMR node 406A can host a local application in the event of a backhaul connection failure, etc.

In operation 1010, the edge orchestrator 412 provides workload instantiation data to the AMR node 406A. The workload instantiation data may include virtual machine images, container images, resource usage data, duration data, and any other information required by the AMR node 406A to implement one of the local applications 608. In response at operation 1012, the AMR node 406A offline application information. Offline application information may include but is not limited to an updated version of the orchestration information transmitted in operations 1004, an Internet Protocol (IP) service type, a QoS agreement of the client device 402A, etc. The operations 1002 - 1012 collectively form an example implementation of block 802 of FIG. 8.

In operations 1014, the client device 402A provides a request to one or more devices implementing core network functions. The one or more devices may include devices in the edge cloud 110 and/or devices implementing the edge applications 404. The operations of 1014 describe a request to attach the workload to a local device if a degradation in network connectivity causes the edge orchestrator 412 to appear offline. The AMR node 406A then sets up an offline bearer with the client device 402A in the operations 1016. As used above and herein, a bearer refers to a connection between two devices defined by one or more configurations. The one or more configurations describe parameters within the physical layer and data link layer (e.g., levels one and two) of the Open Systems Interconnection (OSI) model that are used to define a QoS agreement. Accordingly, the operations 1016 establish a set of configurations to be used when the edge application(s) 404 normally used to execute workloads are offline. In the operations 1018, the edge orchestrator 412 informs the client device 402A that the attachment request of operations 1014 has been successful. The operations 1014 - 1018 collectively form an example implementation of block 804 of FIG. 8.

In operations 1020, the client device 402A and the edge application(s) 404 have an end-to-end connection. With this connection, an application running on the client device 402A generates a workload that is transferred through the RAN of FIG. 4, transferred through the edge cloud 110, and ultimately executed by the edge application(s) 404. In some examples, the execution produces a workload result that is transferred back to the client device 402A. The operations 1020 may be referred to as online connectivity because the client device 402A can offload workloads to the edge application(s) 404 while maintaining a QoS agreement, as intended during normal operations of the RAN and edge cloud 110 of FIG. 4.

In the operation 1022, the edge application(s) 404 uses the period of online connectivity to provide offline application information to the client device 402A. In general, the offline application information describes how the client device 402A can identify and use a local version of the edge application (that was established on the AMR node 406A during operations 1002 - 1012) to continue workload processing in the event that the edge application(s) 404 go offline. The offline application information may include but is not limited to IP information, port information, service type data, etc.

In the example of FIG. 10, one or more backhaul connections degrade after operation 1022, causing the edge application(s) 404 to go offline. The loss of connectivity may occur for any reason and may occur any amount of time after operation 1022. However, connectivity still exists between the client device 402A and the AMR node 406A after operation 1022. As a result, in operation 1024, the AMR node 406A changes to an offline-backhaul state using the client interface circuitry 602. Changing to an offline-backhaul state may include, but is not limited to, the client device 402A and/or the AMR node 406A transitioning to configurations described in the offline bearer of operation 1016.

In the operations 1026, the client device 402A provides workloads to the AMR node 406A that are executed locally on the AMR node 406A. The AMR node 406A communicates with the client device 402A using the client interface circuitry 602 to both receive workloads and provide workload results, thereby temporarily maintaining the QoS agreement while the backhaul connectivity is repaired.

In the example of FIG, 10, backhaul connectivity is repaired after operations 1026 such that offloading workloads to the edge application(s) 404 will again satisfy the QoS agreement. This resumption in backhaul connectivity may occur for any reason (e.g., an error being resolved, a change in weather improving signal strength, a different signal path through the RAN and edge cloud 110 being identified, etc.) and may occur any amount of time after operations 1026. In response to the backhaul connectivity resuming, the AMR node 406A informs the client device 402A that the edge application(s) 404 is online in operation 1028. The AMR node 406A also uses the cloud interface circuitry 604 to synchronize the local instance of the application with the corresponding edge application(s) 404. Synchronization may include, but is not limited to, the transmission of workload results computed by the AMR node 406A to the edge application(s) 404.

In operations 1032, the end-to-end connection resumes between the client device 402A and the edge application(s). That is, workloads generated by the client device 402A are again processed remotely by the edge application(s) 404 rather than locally by AMR node 406A. In some examples, the complexity of a task results in a second workload generated by the client device 402A being dependent on the result of a first, previous workload. By synchronizing with the edge application(s) 404 at operations 1030, the AMR node 406A ensures such dependencies continue to have accurate workload results, even when network connectivity issues cause the first workload to be processed locally and the second workload to be processed remotely.

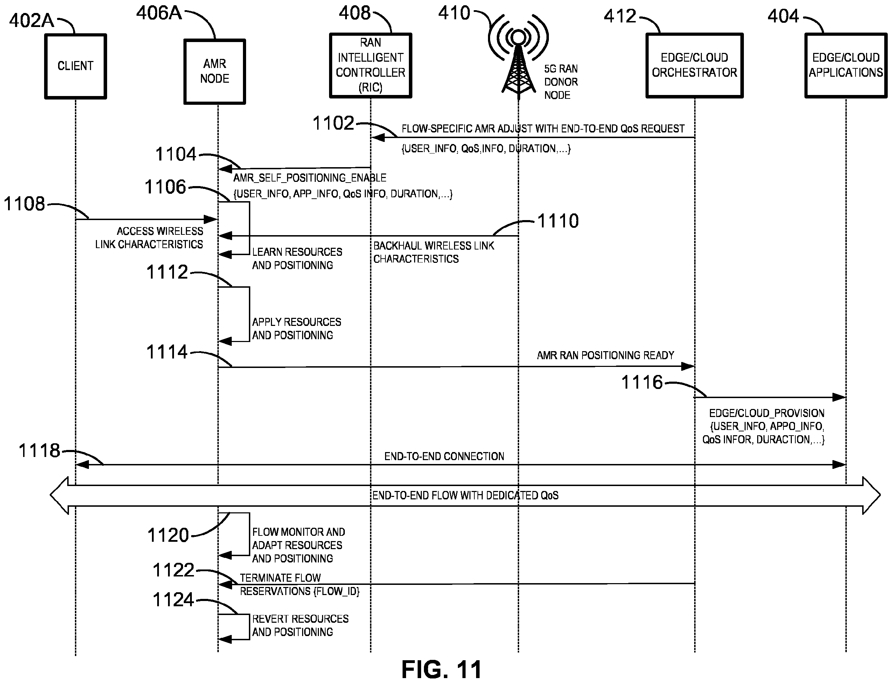

FIG. 11 is an illustrative example of communications between a user device, RAN node, RIC, and edge application of FIG. 4 to re-position an AMR node 406A. FIG. 11 includes the example client device 402A, the example AMR node 406A, the example RIC node 408, the example donor node 410, the example edge orchestrator 412, the example edge applications 404, and example operations 1102 - 1124.

The decision to move the AMR node 406A may be implemented by any device within the RAN or edge cloud 110 of FIG. 4. In block FIG. 8, the RIC node 408 determines a QoS agreement is not being satisfied at block 808 and causes the AMR node 406A to move in block 810. In operation 1102 of FIG. 11, the edge orchestrator 412 evaluates the QoS agreement and requests the RIC node 408 to move the AMR node 406A. The edge orchestrator 412 may additionally provide client device 402A identification information and corresponding QoS agreement information in operation 1102.

In the operation 1104, the position controller circuitry 510 within the RIC node 408 provides permission to the AMR node 406A for the position determiner 612 to determine a new location and move to the new location. In some examples, operation 1104 is referred to as enabling self-positioning. The RIC node 408 may additionally provide client device 402A identification information, QoS agreement information, information describing the client application producing the workloads, etc., to the AMR node 406A in the operation 1104.

In the operation 1106, the position determiner 612 executes the neural network model 702 to determine estimate one or more changes to location and/or power for the AMR node 406A to better service the client device 402A and improve compliance with the QoS agreement. The position determiner 612 uses connectivity metrics of the client device 402A (obtained in operations 1108) and connectivity metrics of the backhaul connection (obtained in operations 1110 via the donor node 410) as inputs to the neural network model 702.

In the operations 1112, the AMR node 406A applies the change(s) estimated in operation 1106. That is, the AMR node 406A moves locations and/or changes an amount of power used to transmit and receive data as described above in block 908 of FIG. 9. The AMR node 406A then informs the edge orchestrator 412 it has moved to a new location in operation 1114.

In the operation 1116, the edge orchestrator 412 provides the relevant edge application(s) 404 with the QoS agreement and a description of connectivity metrics that affect the particular QoS agreement. The information in operation 1116 may include but is not limited to a description of the client device 402A, a description of the application generating the workloads, an identification and position of the AMR node 406a, etc.

In the operations 1118, the client device 402A and the edge application(s) 404 have an end-to-end connection. With this connection, an application running on the client device 402A generates a workload that is transferred using the AMR node 406A in the new position. In some examples, the execution produces a workload result that is transferred back to the client device 402A.

In the operations 1120, the AMR node 406A monitors connectivity metrics to determine if the QoS agreement remains satisfied. In some examples of the operations 1120, the AMR node 406A continues to move or change power usage to maintain the QoS agreement as network conditions continue to change. The operations 1120 occur during the end-to-end connection between the client device 402A and edge application(s) 404 established in operation 1118.

In the operations 1122, the edge orchestrator 412 notifies the AMR node 406A that the device no longer needs to self-position to satisfy the QoS agreement of the client device 402A. The determination may occur because the client device 402A moves to an area within the RAN that has stronger connectivity, because the client device 402A stopped offloading workloads, etc. Accordingly, in the operations 1124, the AMR node reverts its power usage and positioning to parameters that better service the RAN as a whole (as opposed to the specific QoS agreement of the client device 402A). In some examples, the RIC node 408 determines the power usage and location of the AMR node 406A at operation 1124.

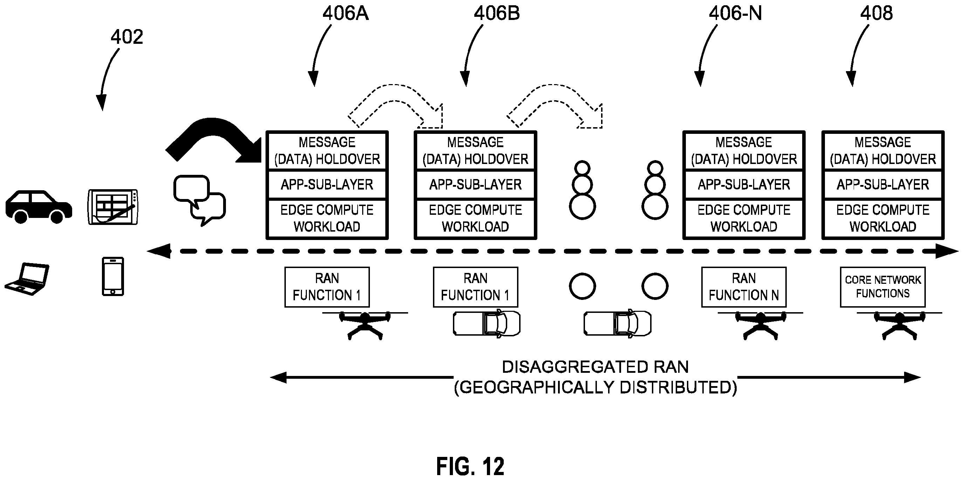

FIG. 12 is an illustrative example of message holdover between the client devices 402 and RAN of FIG. 4. The example of FIG. 12 includes the example client devices 402, the example AMR nodes 406, and the example RIC node 408.

In the example of FIG. 12, only one of the AMR nodes 406 served as intermediate devices between a given client device 402A and the RIC node 408. However, the mobility of the client devices 402 may require network connectivity to be established in remote locations. In such examples, a given workload request from one of the client devices 402 may transfer between an arbitrary number of geographically distributed AMR nodes 406A, 406B, ..., 406-*n*, before reaching the RIC node 408.

Each of the AMR nodes 406A, 406B, ..., 406-*n*, may be implemented as described above in connection with FIG. 5, including separate client-facing and cloud-facing interfaces, and virtual machines, containers, and resources available to temporarily run local instances of edge applications. Accordingly, if any part of the backhaul connection fails (e.g., the nth AMR node loses connection), the previous device in the connection (e.g., the *(n-1)*th AMR node) can provide holdover service and process the workload locally until the backhaul connection is repaired, as described above in connection with FIG. 10. As a result, the client device 402A does not have to re-transmit data if the data is lost at an intermediate device.

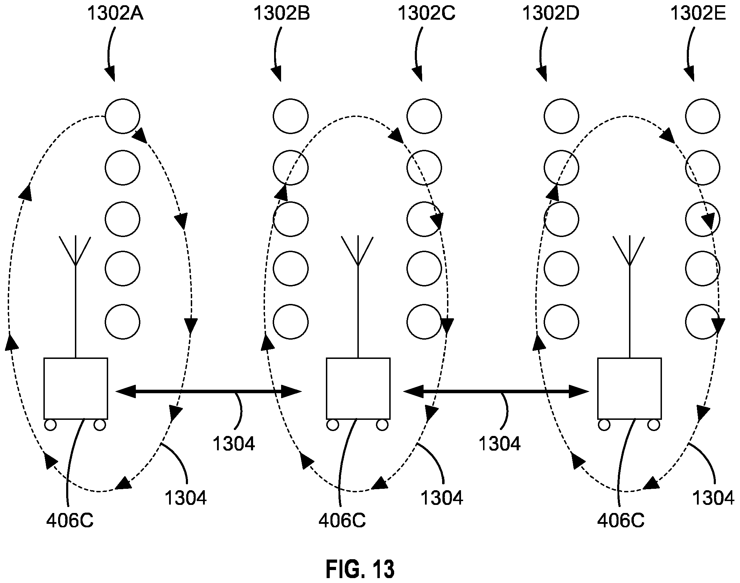

FIG. 13 is an example of intermittent wireless-backhaul connectivity loss within the AMR node of FIG. 4. FIG. 13 includes the example AMR node 406A, example sensor suites 1302A - 1302E, and an example path 1304.

The sensor suites 1302A - 1302E are example implementations of client devices 402. In FIG. 13, each device within the sensor suites 1302A - 1302E measures a physical phenomenon and generate workloads designed for one or more edge applications 404 to aggregate and analyze the measurements. The sensor suites 1302A - 1302E may be in a warehouse, agricultural field, industry floors, or any other suitable environment.

In the example of FIG. 13, the sensor suites 1302A - 1302E are geographically positioned and/or distributed so that the use of stationary intermediate devices (e.g., cell towers or other devices affixed to existing infrastructure) is impracticable. Instead, the AMR node 406C autonomously moves along the path 1304 in a repeated manner, moving back and forth amongst the sensor suites 1302A - 1302E. As a result, the AMR node 406C reduces overall deployment cost and helps in energy conservation goals.

In FIG. 13, the AMR node 406C operates in a remote location such that a backhaul connection can only be established on part of the path 1304. For example, while near sensor suites 1302D, 1302E, the AMR node 406C can connect to a subsequent intermediate device and offload workloads. However, while near sensor suites 1302A, 1302B, 1302C, the connection to the subsequent intermediate device and a QoS agreement of the sensors cannot be met by offloading workloads. Such an example may be referred to as intermittent connectivity because the AMR node 406C repeatedly gains and loses a backhaul connection.

When the AMR node 406C loses backhaul connection, it uses the local applications 608 and client interface circuitry 602 to execute workloads. For example, the AMR node 406C may from sensor suites 1302A, 1302B, 1302C locally when travelling through the foregoing sensors. The AMR node 406C may then transmit the measurements from all sensor suites 1302A - 1302E to the edge applications 404 when the backhaul connection is re-established near sensor suite 1302E. As a result, the edge application 404 can perform the expensive task of analyzing the sensor data and the QoS agreement can be maintained, even while the AMR node 406C regularly gains and loses backhaul connectivity.

FIG. 14 is a block diagram of an example programmable circuitry platform 1400 structured to execute and/or instantiate the example machine-readable instructions and/or the example operations of FIGS. 8-11 to implement the RIC node 408 or one of the AMR nodes 406 of FIG. 4. The programmable circuitry platform 1400 can be, for example, a server, a personal computer, a workstation, a self-learning machine (e.g., a neural network), a mobile device (e.g., a cell phone, a smart phone, a tablet such as an iPad^{™}), a drone, an Internet appliance, a smart car, or any other type of computing and/or electronic device.

The programmable circuitry platform 1400 of the illustrated example includes programmable circuitry 1412. The programmable circuitry 1412 of the illustrated example is hardware. For example, the programmable circuitry 1412 can be implemented by one or more integrated circuits, logic circuits, FPGAs, microprocessors, CPUs, GPUs, DSPs, and/or microcontrollers from any desired family or manufacturer. The programmable circuitry 1412 may be implemented by one or more semiconductor based (e.g., silicon based) devices. In this example, the programmable circuitry 1412 implements the workflow controller circuitry 504, performance controller circuitry 506, learning agent 508, position controller circuitry 510, and UPF 512 if implementing the RIC node 408. Additionally or alternatively, the programmable circuitry 1412 implements the gNodeB base station 606, learning agent 610, the position determiner 612, the mail server 614, and the update monitor 616.

The programmable circuitry 1412 of the illustrated example includes a local memory 1413 (e.g., a cache, registers, etc.). The programmable circuitry 1412 of the illustrated example is in communication with main memory 1414, 1416, which includes a volatile memory 1414 and a non-volatile memory 1416, by a bus 1418. The volatile memory 1414 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1416 may be implemented by flash memory and/or any other desired type of memory device. Access to the main memory 1414, 1416 of the illustrated example is controlled by a memory controller 1417. In some examples, the memory controller 1417 may be implemented by one or more integrated circuits, logic circuits, microcontrollers from any desired family or manufacturer, or any other type of circuitry to manage the flow of data going to and from the main memory 1414, 1416.

The programmable circuitry platform 1400 of the illustrated example also includes interface circuitry 1420. The interface circuitry 1420 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 1422 are connected to the interface circuitry 1420. The input device(s) 1422 permit(s) a user (e.g., a human user, a machine user, etc.) to enter data and/or commands into the programmable circuitry 1412. The input device(s) 1422 can be implemented by, for example, an audio sensor, a microphone, a camera (still or video), a keyboard, a button, a mouse, a touchscreen, a trackpad, a trackball, an isopoint device, and/or a voice recognition system.

One or more output devices 1424 are also connected to the interface circuitry 1420 of the illustrated example. The output device(s) 1424 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1420 of the illustrated example, thus, typically includes a graphics driver card, a graphics driver chip, and/or graphics processor circuitry such as a GPU.

The interface circuitry 1420 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1426. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1400 of the illustrated example also includes one or more mass storage discs or devices 1428 to store firmware, software, and/or data. Examples of such mass storage discs or devices 1428 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 1432, which may be implemented by the machine readable instructions of FIGS. 8-11, may be stored in the mass storage device 1428, in the volatile memory 1414, in the non-volatile memory 1416, and/or on at least one non-transitory computer readable storage medium such as a CD or DVD which may be removable.

FIG. 15 is a block diagram of an example implementation of the programmable circuitry 1412 of FIG. 14. In this example, the programmable circuitry 1412 of FIG. 14 is implemented by a microprocessor 1500. For example, the microprocessor 1500 may be a general-purpose microprocessor (e.g., general-purpose microprocessor circuitry). The microprocessor 1500 executes some or all of the machine-readable instructions of the flowcharts of FIGS. 8-11 to effectively instantiate the circuitry of FIG. 2 as logic circuits to perform operations corresponding to those machine readable instructions. In some such examples, the circuitry of FIGS. 6 and 7 is instantiated by the hardware circuits of the microprocessor 1500 in combination with the machine-readable instructions. For example, the microprocessor 1500 may be implemented by multi-core hardware circuitry such as a CPU, a DSP, a GPU, an XPU, etc. Although it may include any number of example cores 1502 (e.g., 1 core), the microprocessor 1500 of this example is a multi-core semiconductor device including N cores. The cores 1502 of the microprocessor 1500 may operate independently or may cooperate to execute machine readable instructions. For example, machine code corresponding to a firmware program, an embedded software program, or a software program may be executed by one of the cores 1502 or may be executed by multiple ones of the cores 1502 at the same or different times. In some examples, the machine code corresponding to the firmware program, the embedded software program, or the software program is split into threads and executed in parallel by two or more of the cores 1502. The software program may correspond to a portion or all of the machine readable instructions and/or operations represented by the flowcharts of FIGS. 8-11.

The cores 1502 may communicate by a first example bus 1504. In some examples, the first bus 1504 may be implemented by a bus to effectuate communication associated with one(s) of the cores 1502. For example, the first bus 1504 may be implemented by at least one of an Inter-Integrated Circuit (I2C) bus, a Serial Peripheral Interface (SPI) bus, a PCI bus, or a PCIe bus. Additionally or alternatively, the first bus 1504 may be implemented by any other type of computing or electrical bus. The cores 1502 may obtain data, instructions, and/or signals from one or more external devices by example interface circuitry 1506. The cores 1502 may output data, instructions, and/or signals to the one or more external devices by the interface circuitry 1506. Although the cores 1502 of this example include example local memory 1520 (e.g., Level 1 (L1) cache that may be split into an L1 data cache and an L1 instruction cache), the microprocessor 1500 also includes example shared memory 1510 that may be shared by the cores (e.g., Level 2 (L2 cache)) for high-speed access to data and/or instructions. Data and/or instructions may be transferred (e.g., shared) by writing to and/or reading from the shared memory 1510. The local memory 1520 of each of the cores 1502 and the shared memory 1510 may be part of a hierarchy of storage devices including multiple levels of cache memory and the main memory (e.g., the main memory 1414, 1416 of FIG. 14). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1502 may be referred to as a CPU, DSP, GPU, etc., or any other type of hardware circuitry. Each core 1502 includes control unit circuitry 1514, arithmetic and logic (AL) circuitry (sometimes referred to as an ALU) 1516, a plurality of registers 1518, the local memory 1520, and a second example bus 1522. Other structures may be present. For example, each core 1502 may include vector unit circuitry, single instruction multiple data (SIMD) unit circuitry, load/store unit (LSU) circuitry, branch/jump unit circuitry, floating-point unit (FPU) circuitry, etc. The control unit circuitry 1514 includes semiconductor-based circuits structured to control (e.g., coordinate) data movement within the corresponding core 1502. The AL circuitry 1516 includes semiconductor-based circuits structured to perform one or more mathematic and/or logic operations on the data within the corresponding core 1502. The AL circuitry 1516 of some examples performs integer based operations. In some examples, the AL circuitry 1516 also performs floating-point operations. In some examples, the AL circuitry 1516 may include first AL circuitry that performs integer-based operations and second AL circuitry that performs floating-point operations. In some examples, the AL circuitry 1516 may be referred to as an Arithmetic Logic Unit (ALU).

The registers 1518 are semiconductor-based structures to store data and/or instructions such as results of one or more of the operations performed by the AL circuitry 1516 of the corresponding core 1502. For example, the registers 1518 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1518 may be arranged in a bank as shown in FIG. 15. Alternatively, the registers 1518 may be organized in any other arrangement, format, or structure, such as by being distributed throughout the core 1502 to shorten access time. The second bus 1522 may be implemented by at least one of an I2C bus, a SPI bus, a PCI bus, or a PCIe bus.

Each core 1502 and/or, more generally, the microprocessor 1500 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1500 is a semiconductor device fabricated to include many transistors interconnected to implement the structures described above in one or more integrated circuits (ICs) contained in one or more packages.

The microprocessor 1500 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1500, in the same chip package as the microprocessor 1500 and/or in one or more separate packages from the microprocessor 1500.

FIG. 16 is a block diagram of another example implementation of the programmable circuitry 1412 of FIG. 14. In this example, the programmable circuitry 1412 is implemented by FPGA circuitry 1600. For example, the FPGA circuitry 1600 may be implemented by an FPGA. The FPGA circuitry 1600 can be used, for example, to perform operations that could otherwise be performed by the example microprocessor 1500 of FIG. 15 executing corresponding machine readable instructions. However, once configured, the FPGA circuitry 1600 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 1500 of FIG. 15 described above (which is a general purpose device that may be programmed to execute some or all of the machine readable instructions represented by the flowchart(s) of FIGS. 8-11 but whose interconnections and logic circuitry are fixed once fabricated), the FPGA circuitry 1600 of the example of FIG. 16 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 8-11. In particular, the FPGA circuitry 1600 may be thought of as an array of logic gates, interconnections, and switches. The switches can be programmed to change how the logic gates are interconnected by the interconnections, effectively forming one or more dedicated logic circuits (unless and until the FPGA circuitry 1600 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 8-11. As such, the FPGA circuitry 1600 may be configured and/or structured to effectively instantiate some or all of the operations/functions corresponding to the machine readable instructions of the flowchart(s) of FIGS. 8-11 as dedicated logic circuits to perform the operations/functions corresponding to those software instructions in a dedicated manner analogous to an ASIC. Therefore, the FPGA circuitry 1600 may perform the operations/functions corresponding to the some or all of the machine readable instructions of FIGS. 8-11 faster than the general-purpose microprocessor can execute the same.

In the example of FIG. 16, the FPGA circuitry 1600 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1600 of FIG. 16 may access and/or load the binary file to cause the FPGA circuitry 1600 of FIG. 16 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1600 of FIG. 16 to cause configuration and/or structuring of the FPGA circuitry 1600 of FIG. 16, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1600 of FIG. 16 may access and/or load the binary file to cause the FPGA circuitry 1600 of FIG. 16 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1600 of FIG. 16 to cause configuration and/or structuring of the FPGA circuitry 1600 of FIG. 16, or portion(s) thereof.

The FPGA circuitry 1600 of FIG. 16, includes example input/output (I/O) circuitry 1602 to obtain and/or output data to/from example configuration circuitry 1604 and/or external hardware 1606. For example, the configuration circuitry 1604 may be implemented by interface circuitry that may obtain a binary file, which may be implemented by a bit stream, data, and/or machine-readable instructions, to configure the FPGA circuitry 1600, or portion(s) thereof. In some such examples, the configuration circuitry 1604 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1606 may be implemented by external hardware circuitry. For example, the external hardware 1606 may be implemented by the microprocessor 1500 of FIG. 15.

The FPGA circuitry 1600 also includes an array of example logic gate circuitry 1608, a plurality of example configurable interconnections 1610, and example storage circuitry 1612. The logic gate circuitry 1608 and the configurable interconnections 1610 are configurable to instantiate one or more operations/functions that may correspond to at least some of the machine readable instructions of FIGS. 8-11 and/or other desired operations. The logic gate circuitry 1608 shown in FIG. 16 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1608 to enable configuration of the electrical structures and/or the logic gates to form circuits to perform desired operations/functions. The logic gate circuitry 1608 may include other electrical structures such as look-up tables (LUTs), registers (e.g., flip-flops or latches), multiplexers, etc.

The configurable interconnections 1610 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1608 to program desired logic circuits.

The storage circuitry 1612 of the illustrated example is structured to store result(s) of the one or more of the operations performed by corresponding logic gates. The storage circuitry 1612 may be implemented by registers or the like. In the illustrated example, the storage circuitry 1612 is distributed amongst the logic gate circuitry 1608 to facilitate access and increase execution speed.

The example FPGA circuitry 1600 of FIG. 16 also includes example dedicated operations circuitry 1614. In this example, the dedicated operations circuitry 1614 includes special purpose circuitry 1616 that may be invoked to implement commonly used functions to avoid the need to program those functions in the field. Examples of such special purpose circuitry 1616 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1600 may also include example general purpose programmable circuitry 1618 such as an example CPU 1620 and/or an example DSP 1622. Other general purpose programmable circuitry 1618 may additionally or alternatively be present such as a GPU, an XPU, etc., that can be programmed to perform other operations.

Although FIGS. 15 and 16 illustrate two example implementations of the programmable circuitry 1412 of FIG. 14, many other approaches are contemplated. For example, FPGA circuitry may include an on-board CPU, such as one or more of the example CPU 1620 of FIG. 15. Therefore, the programmable circuitry 1412 of FIG. 14 may additionally be implemented by combining at least the example microprocessor 1500 of FIG. 15 and the example FPGA circuitry 1600 of FIG. 16. In some such hybrid examples, one or more cores 1502 of FIG. 15 may execute a first portion of the machine readable instructions represented by the flowchart(s) of FIGS. 8-11 to perform first operation(s)/function(s), the FPGA circuitry 1600 of FIG. 16 may be configured and/or structured to perform second operation(s)/function(s) corresponding to a second portion of the machine readable instructions represented by the flowcharts of FIG. 8-11, and/or an ASIC may be configured and/or structured to perform third operation(s)/function(s) corresponding to a third portion of the machine readable instructions represented by the flowcharts of FIGS. 8-11.

It should be understood that some or all of the circuitry of FIGS. 5 and 6 may, thus, be instantiated at the same or different times. For example, same and/or different portion(s) of the microprocessor 1500 of FIG. 15 may be programmed to execute portion(s) of machine-readable instructions at the same and/or different times. In some examples, same and/or different portion(s) of the FPGA circuitry 1600 of FIG. 16 may be configured and/or structured to perform operations/functions corresponding to portion(s) of machine-readable instructions at the same and/or different times.

In some examples, some or all of the circuitry of FIGS. 5 and 6 may be instantiated, for example, in one or more threads executing concurrently and/or in series. For example, the microprocessor 1500 of FIG. 15 may execute machine readable instructions in one or more threads executing concurrently and/or in series. In some examples, the FPGA circuitry 1600 of FIG. 16 may be configured and/or structured to carry out operations/functions concurrently and/or in series. Moreover, in some examples, some or all of the circuitry of FIGS. 5 and 6 may be implemented within one or more virtual machines and/or containers executing on the microprocessor 1500 of FIG. 15.

In some examples, the programmable circuitry 1412 of FIG. 14 may be in one or more packages. For example, the microprocessor 1500 of FIG. 15 and/or the FPGA circuitry 1600 of FIG. 16 may be in one or more packages. In some examples, an XPU may be implemented by the programmable circuitry 1412 of FIG. 14, which may be in one or more packages. For example, the XPU may include a CPU (e.g., the microprocessor 1500 of FIG. 15, the CPU 1620 of FIG. 16, etc.) in one package, a DSP (e.g., the DSP 1622 of FIG. 16) in another package, a GPU in yet another package, and an FPGA (e.g., the FPGA circuitry 1600 of FIG. 16) in still yet another package.

A block diagram illustrating an example software distribution platform 1705 to distribute software such as the example machine readable instructions 1432 of FIG. 14 to other hardware devices (e.g., hardware devices owned and/or operated by third parties from the owner and/or operator of the software distribution platform) is illustrated in FIG. 17. The example software distribution platform 1705 may be implemented by any computer server, data facility, cloud service, etc., capable of storing and transmitting software to other computing devices. The third parties may be customers of the entity owning and/or operating the software distribution platform 1705. For example, the entity that owns and/or operates the software distribution platform 1705 may be a developer, a seller, and/or a licensor of software such as the example machine readable instructions 1432 of FIG. 14. The third parties may be consumers, users, retailers, OEMs, etc., who purchase and/or license the software for use and/or re-sale and/or sub-licensing. In the illustrated example, the software distribution platform 1705 includes one or more servers and one or more storage devices. The storage devices store the machine readable instructions 1432, which may correspond to the example machine readable instructions of FIGS. 8-11, as described above. The one or more servers of the example software distribution platform 1705 are in communication with an example network 1710, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 1432 from the software distribution platform 1705. For example, the software, which may correspond to the example machine readable instructions of FIG. 8-11, may be downloaded to the example programmable circuitry platform 1400, which is to execute the machine readable instructions 1432 to implement the AMR nodes 406 or RIC node 408. In some examples, one or more servers of the software distribution platform 1705 periodically offer, transmit, and/or force updates to the software (e.g., the example machine readable instructions 1432 of FIG. 14) to ensure improvements, patches, updates, etc., are distributed and applied to the software at the end user devices. Although referred to as software above, the distributed "software" could alternatively be firmware.

From the foregoing, it will be appreciated that example systems, apparatus, articles of manufacture, and methods have been disclosed to describe a device that: (a) dynamically transitions between local and remote processing of workloads, and (b) autonomously determines and moves to new locations that improve network connectivity. Disclosed systems, apparatus, articles of manufacture, and methods improve the efficiency of using a computing device by increasing network capability to reliably satisfy a QoS agreement, even when a backhaul connection fails or a client device moves to a remote location. Disclosed systems, apparatus, articles of manufacture, and methods are accordingly directed to one or more improvement(s) in the operation of a machine such as a computer or other electronic and/or mechanical device.

Example methods, apparatus, systems, and articles of manufacture for autonomous mobile RAN / robot nodes are disclosed herein. Further examples and combinations thereof include the following.
Example 1 includes an autonomous mobile radio access network (RAN) node comprising communication circuitry, instructions, and programmable circuitry to cause the communication circuitry to transmit a workload to a server via a network, initiate local processing of the workload after a loss of connectivity with the server, and move the autonomous mobile RAN node from a first location to a second location.
Example 2 includes the autonomous mobile RAN node of example 1, wherein the programmable circuitry is to cause the communication circuitry to transmit a result of the local processing to the server to resume processing of the workload.
Example 3 includes the autonomous mobile RAN node of example 1, wherein the server is to begin to process the workload with an application, and the programmable circuitry is to initiate the local processing with a local instance of the application.
Example 4 includes the autonomous mobile RAN node of example 1, wherein the programmable circuitry is to receive the workload from a client device, receive a prediction from the server, and forward the prediction to the client device.
Example 5 includes the autonomous mobile RAN node of example 4, wherein the prediction is a first prediction, and the programmable circuitry is to make a second prediction after the loss of connectivity with the server, and provide the second prediction to the client device.
Example 6 includes the autonomous mobile RAN node of example 5, wherein the second prediction is based on at least one of (a) the local processing of the workload, or (b) telemetry data from client device.
Example 7 includes the autonomous mobile RAN node of example 1, wherein the programmable circuitry includes one or more of at least one of a central processor unit, a graphics processor unit, or a digital signal processor, the at least one of the central processor unit, the graphics processor unit, or the digital signal processor having control circuitry to control data movement within the programmable circuitry, arithmetic and logic circuitry to perform one or more first operations corresponding to machine-readable data, and one or more registers to store a result of the one or more first operations, the machine-readable data in the mobile RAN node, a Field Programmable Gate Array (FPGA), the FPGA including logic gate circuitry, a plurality of configurable interconnections, and storage circuitry, the logic gate circuitry and the plurality of the configurable interconnections to perform one or more second operations, the storage circuitry to store a result of the one or more second operations, or Application Specific Integrated Circuitry (ASIC) including logic gate circuitry to perform one or more third operations.
Example 8 includes an autonomous mobile radio access network (RAN) node comprising interface circuitry, instructions, and programmable circuitry to cause communication of a workload from a client device to a server to process the workload, identify a second location relative to a first location of the mobile RAN node based on network performance, and cause the autonomous mobile RAN node to move from the first location to the second location.
Example 9 includes the autonomous mobile RAN node of example 8, wherein the network performance is based on (a) a quality of service (QoS) agreement, (b) connectivity between the client device and the mobile RAN node, and (c) connectivity between the mobile RAN node and the server.
Example 10 includes the autonomous mobile RAN node of example 8, wherein the programmable circuitry is to execute a machine learning model to identify the second location.
Example 11 includes the autonomous mobile RAN node of example 10, wherein the programmable circuitry is to, prior to execution, train the machine learning model based on the network performance.
Example 12 includes the autonomous mobile RAN node of example 11, wherein the programmable circuitry is to train the machine learning model based on reinforcement learning.
Example 13 includes the autonomous mobile RAN node of example 8, wherein the autonomous mobile RAN node is a first autonomous mobile RAN node, and to identify the second location, the programmable circuitry is to negotiate with a second autonomous mobile RAN node to mitigate interference between the first autonomous mobile RAN node and the second autonomous mobile RAN node at the second location.
Example 14 includes the autonomous mobile RAN node of example 8, wherein the second location is closer to the client device than the first location to cause the client device to conserve battery power.
Example 15 includes the autonomous mobile RAN node of example 8, wherein the workload is a second workload, the second workload has a data rate greater than a first workload, the first workload received from the client device before the second workload, and the second location is closer to the client device than the first location.
Example 16 includes the autonomous mobile RAN node of example 8, wherein the client device has a higher power budget than the autonomous mobile RAN node, and the second location is closer to a device implementing a backhaul connection to the server than the first location.
Example 17 includes the autonomous mobile RAN node of example 8, wherein the programmable circuitry includes one or more of at least one of a central processor unit, a graphics processor unit, or a digital signal processor, the at least one of the central processor unit, the graphics processor unit, or the digital signal processor having control circuitry to control data movement within the programmable circuitry, arithmetic and logic circuitry to perform one or more first operations corresponding to machine-readable data, and one or more registers to store a result of the one or more first operations, the machine-readable data in the mobile RAN node, a Field Programmable Gate Array (FPGA), the FPGA including logic gate circuitry, a plurality of configurable interconnections, and storage circuitry, the logic gate circuitry and the plurality of the configurable interconnections to perform one or more second operations, the storage circuitry to store a result of the one or more second operations, or Application Specific Integrated Circuitry (ASIC) including logic gate circuitry to perform one or more third operations.
Example 18 includes a method comprising transmitting, with an autonomous mobile radio access network (RAN) node, a workload to a server via a network, initiating, with the autonomous mobile RAN node, local processing of the workload with after a loss of connectivity with the server, and moving the autonomous mobile RAN node from a first location to a second location.
Example 19 includes the method of example 18, further including transmitting, with the autonomous mobile RAN node, a result of the local processing to the server to resume processing of the workload.
Example 20 includes the method of example 18, wherein the server begins to process the workload with an application, and the method further includes, initiating, on the autonomous mobile RAN node, the local processing with a local instance of the application.
The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An autonomous mobile radio access network (RAN) node comprising:
interface circuitry;
instructions; and
programmable circuitry to:
cause communication of a workload from a client device to a server to process the workload;
identify a second location relative to a first location of the mobile RAN node based on network performance; and
cause the autonomous mobile RAN node to move from the first location to the second location.

2. The autonomous mobile RAN node of claim 1, wherein the network performance is based on (a) a quality of service (QoS) agreement, (b) connectivity between the client device and the mobile RAN node, and (c) connectivity between the mobile RAN node and the server.

3. The autonomous mobile RAN node of claims 1 and 2, wherein the programmable circuitry is to execute a machine learning model to identify the second location.

4. The autonomous mobile RAN node of claims 1 and 3, wherein:
the autonomous mobile RAN node is a first autonomous mobile RAN node; and
to identify the second location, the programmable circuitry is to negotiate with a second autonomous mobile RAN node to mitigate interference between the first autonomous mobile RAN node and the second autonomous mobile RAN node at the second location.

5. The autonomous mobile RAN node of claim 1, wherein the second location is closer to the client device than the first location to cause the client device to conserve battery power.

6. The autonomous mobile RAN node of claim 1, wherein:
the workload is a second workload;
the second workload has a data rate greater than a first workload, the first workload received from the client device before the second workload; and
the second location is closer to the client device than the first location.

7. The autonomous mobile RAN node of claim 1, wherein:
the client device has a higher power budget than the autonomous mobile RAN node; and
the second location is closer to a device implementing a backhaul connection to the server than the first location.

8. A method comprising:
causing communication of a workload from a client device to a server to process the workload;
identifying a second location relative to a first location of a mobile autonomous mobile radio access network (RAN) node based on network performance; and
causing the autonomous mobile RAN node to move from the first location to the second location.

9. The method of claim 8, wherein the network performance is based on (a) a quality of service (QoS) agreement, (b) connectivity between the client device and the mobile RAN node, and (c) connectivity between the mobile RAN node and the server.

10. The method of claims 8 and 9, further including executing a machine learning model to identify the second location.

11. The method of claims 8 and 10, wherein:
the autonomous mobile RAN node is a first autonomous mobile RAN node; and
the method further includes identifying the second location by negotiating with a second autonomous mobile RAN node to mitigate interference between the first autonomous mobile RAN node and the second autonomous mobile RAN node at the second location.

12. The method of claim 8, wherein the second location is closer to the client device than the first location to cause the client device to conserve battery power.

13. The method of claim 8, wherein:
the workload is a second workload;
the method further includes receiving a first workload before the second workload, the second workload having a data rate greater than the first workload; and
the second location is closer to the client device than the first location.

14. The method of claim 8, wherein:
the client device has a higher power budget than the autonomous mobile RAN node; and
the second location is closer to a device implementing a backhaul connection to the server than the first location.

15. Machine-readable storage including machine-readable instructions, when executed, to implement a method or realize an apparatus as claimed in any preceding claim.
